# EUROPEAN PATENT APPLICATION

(11) **EP 4 468 406 A1**
(43) Date of publication of application: **27.11.2024**
(21) Application number: 22939243.6
(22) Date of filing: 29.04.2022
(51) Int. Cl.: H01M 4/36, H01M 4/58, H01M 10/0525

(54) **SECONDARY BATTERY, BATTERY MODULE, BATTERY PACK AND ELECTRIC DEVICE**

(71) Applicant: Contemporary Amperex Technology Co., Limited, Fujian 352100 (CN)
(72) Inventor: ZHANG, Limei, Ningde, Fujian 352100 (CN); CHEN, Peipei, Ningde, Fujian 352100 (CN); LIU, Jiao, Ningde, Fujian 352100 (CN)
(74) Representative: Kraus & Lederer PartGmbB
(86) International application number: PCT/CN2022/090386
(87) International publication number: WO 2023/206394

(57) **Abstract**

This application provides a secondary battery, a battery module, a battery pack, and an electric apparatus. The secondary battery includes a positive electrode plate and a non-aqueous electrolyte. The positive electrode plate includes a positive electrode active material having a core-shell structure, the positive electrode active material including a core and a shell enveloping the core. A chemical formula of the core is Li₁₊ₓMn_{1-y}A_{y}P_{1-z}R_{z}O₄. A is one or more elements selected from Zn, Al, Na, K, Mg, Mo, W, Ti, V, Zr, Fe, Ni, Co, Ga, Sn, Sb, Nb and Ge. R is one or more elements selected from B, Si, N, and S. The first coating layer includes a crystalline pyrophosphate LiaMP₂O₇ and/or Mb(P₂O₇)_{c}. The second coating layer includes a crystalline phosphate XPO₄. The third coating layer is carbon. The non-aqueous electrolyte includes a first solvent, the first solvent including one or more of the compounds represented by formula 1.

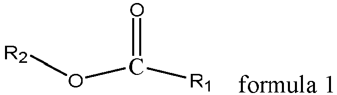

## Description

### TECHNICAL FIELD

This application relates to the field of battery technologies, and in particular, to a secondary battery, a battery module, a battery pack, and an electric apparatus.

### BACKGROUND

In recent years, with the development of lithium-ion secondary battery technologies, lithium-ion secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of lithium-ion secondary batteries, higher requirements are imposed on their energy density, cycling performance, safety performance, and the like.

Lithium manganese phosphate, as a positive electrode active material for lithium-ion secondary batteries, has the advantages of high capacity, good safety and low cost. However, the rate performance of lithium manganese phosphate is poor, which restricts its commercial application.

### SUMMARY

This application provides a secondary battery, a battery module, a battery pack, and an electric apparatus so as to solve the problem of poor rate performance of a lithium-ion secondary battery with lithium manganese phosphate used as its positive electrode active material.

A first aspect of the present invention provides a secondary battery. The secondary battery includes a positive electrode plate and a non-aqueous electrolyte, where the positive electrode plate includes a positive electrode active material having a core-shell structure. The positive electrode active material includes a core and a shell enveloping the core. A chemical formula of the core is Li₁₊ₓMn_{1-y}A_{y}P_{1-z}R_{z}O₄, where x is any value in the range of -0.100 to 0.100, y is any value in the range of 0.001 to 0.500, z is any value in the range of 0.001 to 0.100, A is one or more elements selected from Zn, Al, Na, K, Mg, Mo, W, Ti, V, Zr, Fe, Ni, Co, Ga, Sn, Sb, Nb, and Ge, optionally one or more elements from Fe, Ti, V, Ni, Co, and Mg, R is one or more elements selected from B, Si, N and S, optionally R being one element selected from B, Si, N and S, and the values of x, y, and z satisfy a condition that the entire core is made electrically neutral. The shell includes a first coating layer enveloping the core, a second coating layer enveloping the first coating layer, and a third coating layer enveloping the second coating layer, where the first coating layer includes a crystalline pyrophosphate LiaMP₂O₇ and/or Mb(P₂O₇)_{c}, where 0 ≤ a ≤ 2, 1 ≤ b ≤ 4, and 1 ≤ c ≤ 6, values of a, b, and c satisfy a condition of keeping the crystalline pyrophosphate LiaMP₂O₇ or Mb(P₂O₇)_{c} electrically neutral; and M in the crystalline pyrophosphate LiaMP₂O₇ and Mb(P₂O₇)_{c} each is independently one or more elements selected from Fe, Ni, Mg, Co, Cu, Zn, Ti, Ag, Zr, Nb and Al; the second coating layer includes a crystalline phosphate XPO₄, X being one or more elements selected from Li, Fe, Ni, Mg, Co, Cu, Zn, Ti, Ag, Zr, Nb and Al; and the third coating layer is carbon. The non-aqueous electrolyte includes an organic solvent, where the organic solvent includes a first solvent, the first solvent including one or more of compounds represented by formula 1:

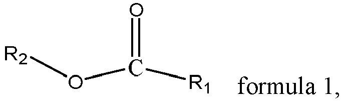

R₁ and R₂ each independently being one of C1 to C10 alkyl and C1 to C10 haloalkyl group, and optionally, R₁ and R₂ each independently being one of methyl group, ethyl group, propyl group, butyl group, pentyl group, hexyl group, fluoromethyl group, fluoroethyl group, fluoropropyl group, fluorobutyl group, fluoropentyl group, and fluorohexyl group, and further optionally, R₁ and R₂ each independently being one of methyl group, ethyl group, propyl group, fluoromethyl group, fluoroethyl group, and fluoropropyl group.

Unless otherwise specified, in the above chemical formula, when A is two or more elements, the foregoing limitation on the value range of y is not only a limitation on the stoichiometric number of each element as A but also a limitation on the sum of the stoichiometric numbers of all elements as A. For example, when A is two or more elements A1, A2, ..., An, the stoichiometric numbers y1, y2, ..., yn of all of A1, A2, ..., An must fall within the value range defined by this application for y, and the sum of y1, y2, ..., yn must also fall within the value range. Similarly, in a case that R is two or more elements, the limitation on the value range of the stoichiometric number of R in this application also has the foregoing meaning.

In this specification, the crystalline means that the crystallinity is above 50%, to be specific, being 50% to 100%. A crystallinity less than 50% is referred to as a glassy state. The crystalline pyrophosphate and crystalline phosphate described in this application have a crystallinity of 50% to 100%. The pyrophosphate and phosphate with a certain crystallinity are not only conducive to giving full play to the ability of the pyrophosphate coating layer in hindering the manganese ion dissolution and the ability of the phosphate coating layer in conducting lithium ions, reducing the interfacial side reactions, but also enables the pyrophosphate coating layer and the phosphate coating layer to be better lattice matched, such that a tight bond between the coating layers can be achieved.

This application provides a new type of lithium manganese phosphate positive electrode active material having a core-shell structure by doping element A at the manganese site and element R at the phosphorus site of lithium manganese phosphate to obtain a doped lithium manganese phosphate core and applying three coatings sequentially on the core surface. Applying the positive electrode active material to a secondary battery can significantly improve the high-temperature cycling performance, cycling stability, and high-temperature storage performance of the secondary battery.

In addition, the first solvent in the non-aqueous electrolyte has a good ability to dissociate lithium salts, but compared with carbonate, the first organic solvent has little interaction with Li+; and as the first solvent gradually dominates a first solvation shell, the desolvation energy of Li⁺ gradually decreases, which is conducive to the rapid deintercalation and intercalation of Li⁺ at the interface, thereby improving the rate performance of the secondary battery. In addition, the first solvent has a low viscosity, which enables the lithium ions deintercalated from the positive electrode active material to rapidly migrate and intercalate in the negative electrode side, and under the driving of concentration polarization, enables the lithium ions at the interface of the positive electrode material to be rapidly transferred into the electrolyte, further improving the rate performance of the secondary battery.

In any embodiment of the first aspect, the foregoing first solvent includes at least one of the following compounds:

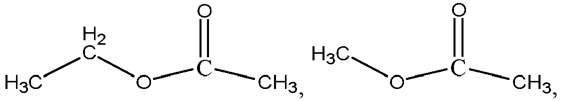

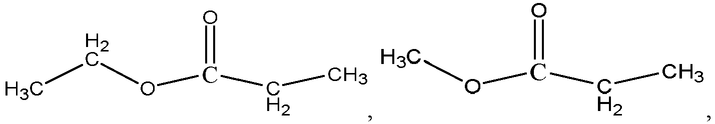

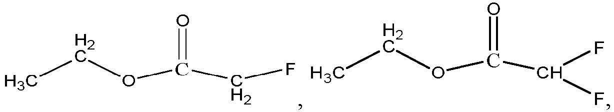

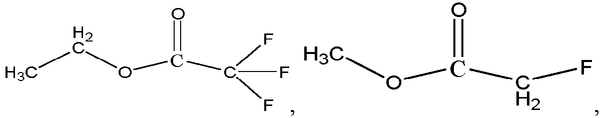

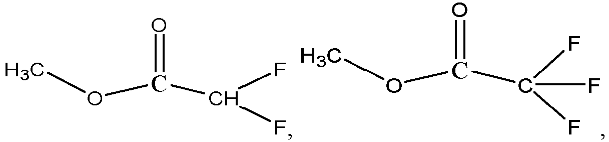

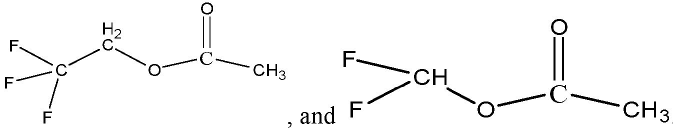

In any embodiment of the first aspect, optionally, the first solvent includes at least one of the following compounds:

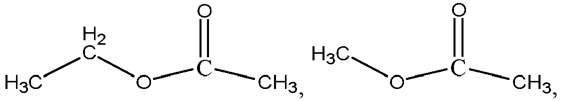

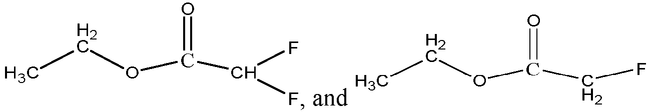

When the foregoing substances are selected as the first solvent, the electrolyte has lower viscosity and better infiltration, and thus has better lithium ion transport ability, such that the rate performance of the secondary battery better is better improved, and in addition, the foregoing first solvents have better chemical stability and better oxidation resistance to the positive electrode active material.

In any embodiment of the first aspect, a mass percentage of the first solvent is w1 based on total mass of the organic solvent, w1 ranging from 20% to 80%; and optionally, w1 ranging from 30% to 75%. By controlling the mass percentage as described above, it is possible to use the first solvent to improve the fast charge performance of the battery while providing the secondary battery with good cycling performance and storage performance.

In any embodiment of the first aspect, optionally, the organic solvent further includes a second solvent, the second solvent including one or more from a group consisting of a linear carbonate and a cyclic carbonate; and further optionally, a mass percentage of the second solvent is w2 based on total mass of the organic solvent, w2 ranging from 20% to 80%; and optionally, w2 ranging from 25% to 70%. The second solvent can work together with the first solvent to improve the cycling performance of the secondary battery.

In any embodiment of the first aspect, the foregoing non-aqueous electrolyte further includes a first additive, the first additive including one or more from a group consisting of sultone and cyclic sulfate. The sultone or cyclic sulfate introduced into the non-aqueous electrolyte forms a layer of polymer with strong ion conductivity, for example, an ester-based sulfate, on the surface of the positive electrode active material during charge of the secondary battery. The polymer can further improve the rate performance of the secondary battery, and can also effectively inhibit the catalytic oxidation of the positive electrode active material to the first solvent, thereby improving the cycling performance and storage performance of the secondary battery. In addition, the sultone or cyclic sulfate is superior to the first solvent in forming a film at the negative electrode, reducing the reaction of α-H on the first solvent with the active lithium obtained by reduction at the negative electrode, thereby further improving the cycling performance and storage performance of the secondary battery.

In any embodiment of the first aspect, the foregoing sultone includes at least one of compounds represented by formula 2: 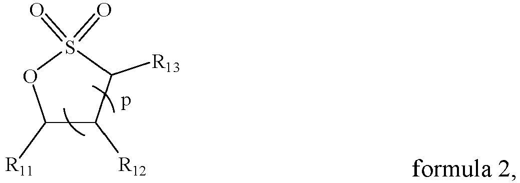 where
p represents 1, 2 or 3;
Rn is one of a hydrogen atom, halogen atom, C1 to C12 alkyl group, C1 to C12 haloalkyl group, C1 to C12 alkoxy group, and C1 to C12 haloalkoxy group; optionally R₁₁ is one of a hydrogen atom, halogen atom, C1 to C6 alkyl group, C1 to C3 haloalkyl group, C1 to C3 alkoxy group, and C1 to C3 haloalkoxy group; optionally the alkoxy is linear alkoxy or cyclic alkoxy; optionally the cyclic alkoxy shares one carbon atom with a parent ring of the sultone, and further optionally the cyclic alkoxy has 4, 5, or 6 carbon atoms;
each R12 is independently one of a hydrogen atom, halogen atom, C1 to C12 alkyl group, C1 to C12 haloalkyl group, C1 to C12 alkoxy group, C1 to C12 haloalkoxy group, and 4- to 7-membered sultone group; optionally, each R12 is independently one of a hydrogen atom, halogen atom, C1 to C3 alkyl group, C1 to C3 haloalkyl group, C1 to C3 alkoxy group, C1 to C3 haloalkoxy group, and 5- to 6-membered sultone group; optionally the sultone group shares one carbon atom with the parent ring of the sultone, and optionally the sultone group is a 5-membered ring;
R₁₁ and R₁₂ each form a 5- to 10-membered cycloalkyl group with respective carbon atoms bonded thereto; and
R₁₃ is one of a hydrogen atom, halogen atom, carbonyl group, C2 to C6 ester group, C1 to C12 alkyl group, C1 to C12 haloalkyl group, C2 to C12 alkenyl group, C1 to C12 alkoxy group, C1 to C12 haloalkoxy group, and C6 to C20 aryl group or benzyl group; and optionally, R₁₃ is one of a hydrogen atom, halogen atom, carbonyl group, C2 to C3 ester group, C1 to C3 alkyl group, C1 to C3 haloalkyl group, C2 to C6 alkenyl group, C1 to C3 alkoxy group, C1 to C3 haloalkoxy group, and C6 to C10 aryl group or benzyl group. The foregoing sultone is a sultone commonly used in the art which is widely available at a relatively low cost.

In any embodiment of the first aspect, the foregoing cyclic sulfate includes at least one of compounds represented by formula 3, 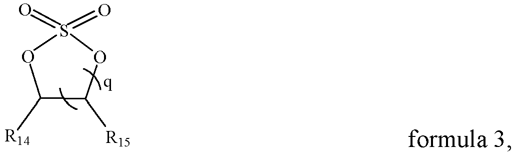 where
q represents 1, 2, or 3;
R₁₄ is one of a hydrogen atom, halogen atom, carbonyl group, C1 to C12 alkyl group, C1 to C12 haloalkyl group, C2 to C12 alkenyl group, C1 to C12 alkoxy group, C1 to C12 haloalkoxy group, C2 to C6 ester group, and 4- to 7-membered cyclic sulfate group; optionally R₁₄ is one of a hydrogen atom, halogen atom, carbonyl group, double bond, C1 to C6 alkyl group, C1 to C3 haloalkyl group, C1 to C3 alkoxy group, C1 to C3 haloalkoxy group, C2 to C3 easter group, and 4- to 5-membered cyclic sulfate group; and optionally the cyclic sulfate group shares one carbon atom with the cyclic sulfate;
each R₁₅ is independently one of a hydrogen atom, halogen atom, C1 to C12 alkyl group, C1 to C12 haloalkyl group, C1 to C12 alkoxy group, C1 to C12 haloalkoxy group, and C6 to C20 aryl group; and optionally each R₁₅ is independently one of a hydrogen atom, halogen atom, C1 to C6 alkyl group, C1 to C3 haloalkyl group, C1 to C3 alkoxy group, C1 to C3 haloalkoxy group, and C6 to C10 aryl group; or
R₁₄ and R₁₅ each form a 4- to 7-membered cyclic sulfate group together with respective carbon atoms bonded thereto, and further optionally R₁₄ and R₁₅ each form a 5-membered cyclic sulfate group together with respective carbon atoms bonded thereto.

The foregoing cyclic sulfate is a cyclic sulfate commonly used in the art which is widely available at a low cost.

In any embodiment of the first aspect, optionally, the sultone includes at least one of the following compounds:

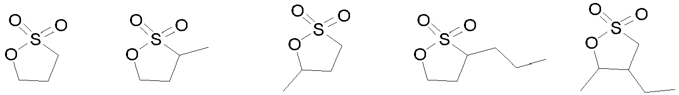

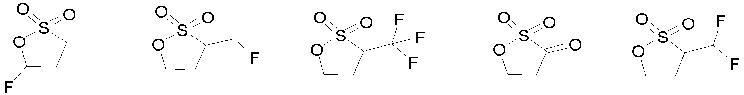

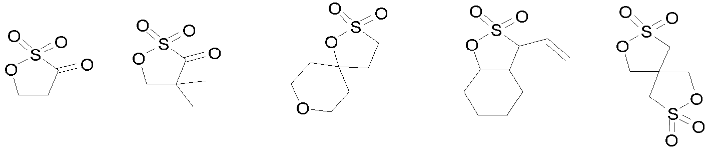

In any embodiment of the first aspect, optionally, the cyclic sulfate includes at least one of the following compounds:

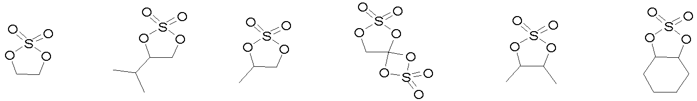

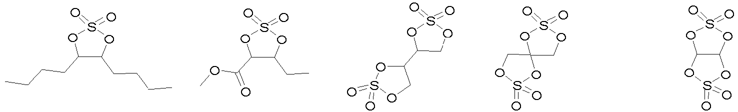

Further optionally, the sultone includes at least one of the following compounds:

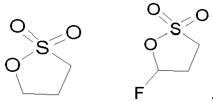

Further optionally, the cyclic sulfate includes at least one of the following compounds:

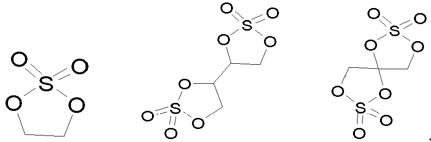

The above sultone and cyclic sulfate can more easily form a polymer at the positive electrode.

In any embodiment of the first aspect, a percentage of the foregoing first additive is W3 based on total mass of the non-aqueous electrolyte and 0.01% ≤ W3 ≤ 20%, optionally 0.1% ≤ W3 ≤ 10%, and further optionally 0.3% ≤ W3 ≤ 5%. This avoids the increase in impedance of the positive and negative electrodes caused by the introduction of excessive sultone or cyclic sulfate, guaranteeing a significant improvement in the capacity and rate performance of the lithium-ion battery.

In any embodiment of the first aspect, the non-aqueous electrolyte further includes a second additive, the second additive including one or more from a group consisting of a sulfite compound, disulfonate compound, nitrile compound, aromatic compound, phosphazene compound, anhydride compound, phosphite compound, phosphate compound, and borate compound. The second additive helps to form a denser and more stable interfacial film on the surface of the positive electrode and/or negative electrode active material, thereby further improving at least one of the cycling performance, the storage performance, and the rate performance of the secondary battery.

In any embodiment of the first aspect, a percentage of the second additive is W4 based on total mass of the non-aqueous electrolyte and 0.01% ≤ W4 ≤ 20%, optionally 0.05% ≤ W4 ≤ 5%, and further optionally 0.1% ≤ W4 ≤ 3%. Such percentage range enables the second additive to be fully functioned.

In any embodiment of the first aspect, an application amount of the first coating layer is C1wt% based on weight of the core, C1 being greater than 0 and less than or equal to 6, optionally greater than 0 and less than or equal to 5.5, and further optionally greater than 0 and less than or equal to 2; and/or an application amount of the second coating layer is C2wt% based on the weight of the core, C2 being greater than 0 and less than or equal to 6, optionally greater than 0 and less than or equal to 5.5, and more optionally being 2 to 4; and/or an application amount of the third coating layer is C3wt% based on the weight of the core, C3 being greater than 0 and less than or equal to 6, optionally greater than 0 and less than or equal to 5.5, and more optionally greater than 0 and less than or equal to 2. In the positive electrode active material having a core-shell structure of the foregoing embodiment, the application amounts of the three coating layers are preferably within the foregoing ranges, and therefore the core can be fully enveloped and the kinetic performance and safety performance of the secondary battery can be further improved without reducing the gram capacity of the positive electrode active material.

In any embodiment of the first aspect, the crystalline pyrophosphate in the first coating layer has an interplanar spacing in the range of 0.293 nm to 0.470 nm and an included angle in the range of 18.00° to 32.00° in the [111] crystal orientation; and the crystalline phosphate in the second coating layer has an interplanar spacing in the range of 0.244 nm to 0.425 nm and an included angle in the range of 20.00° to 37.00° in the [111] crystal orientation. Both the first coating layer and the second coating layer in the positive electrode active material of the foregoing embodiment use crystalline substances whose interplanar spacing and included angle range are in the foregoing ranges. Thus, the heterophase structures in the coating layer can be more effectively avoided, thereby further increasing the gram capacity of the material and improving the cycling performance and rate performance.

In any embodiment of the first aspect, a ratio of y to 1-y in the core ranges from 1:10 to 1:1, and optionally from 1:4 to 1:1. This further improves the cycling performance and rate performance of the secondary battery.

In any embodiment of the first aspect, a ratio of z to 1-z in the core ranges from 1:999 to 1:9, and optionally from 1:499 to 1:249. This further improves the cycling performance and rate performance of the secondary battery.

In any of the embodiments of the first aspect, the carbon of the third coating layer is a mixture of SP2 carbon and SP3 carbon; and optionally, a molar ratio of the SP2 carbon to the SP3 carbon is any value in the range of 0.1 to 10, and optionally, any value in the range of 2.0 to 3.0. The foregoing embodiment better improves the comprehensive performance of the secondary battery by limiting the molar ratio of SP2 carbon to SP3 carbon to the foregoing range.

In any embodiment of the first aspect, a thickness of the first coating layer ranges from 1 nm to 10 nm; and/or a thickness of the second coating layer ranges from 2 nm to 15 nm; and/or a thickness of the third coating layer ranges from 2 nm to 25 nm. In the foregoing above embodiment, when the thickness of the first coating layer is in the range of 1 nm to 10 nm, it can avoid an unfavorable effect, caused by an excessively thick first coating layer, on the kinetic performance of the material; and avoid the problem that the migration of the transition metal ions cannot be hindered effectively in a case of an excessively thin first coating layer. With the thickness of the second coating layer falling in the range of 2 nm to 15 nm, the second coating layer has a stable surface structure and small side reactions with the electrolyte, such that the interfacial side reactions can be more effectively mitigated, thereby more apparently improving the high-temperature performance of the secondary battery. The thickness of the third coating layer being in the range of 2 nm to 20 nm can further improve the electrical conductivity of the material and increase the compacted density performance of the battery electrode prepared using the positive electrode active material.

In any embodiment of the first aspect, based on weight of the positive electrode active material having a core-shell structure, a percentage of element manganese is in the range of 10wt% to 35wt%, optionally in the range of 15wt% to 30wt%, and more optionally in the range of 17wt% to 20wt%, and a percentage of element phosphorus is in the range of 12wt% to 25wt%, and optionally in the range of 15wt% to 20wt%; and a weight ratio of element manganese to element phosphorus is in the range of 0.90 to 1.25, optionally in the range of 0.95 to 1.20.

In the positive electrode active material having a core-shell structure of the foregoing embodiment, limiting the percentage of the element manganese within the foregoing range can effectively avoid problems such as deterioration of the stability of the material structure and decrease in density that may be caused if the percentage of the element manganese is too large, so as to more effectively improve the performance of the secondary battery in terms of cycle, storage, and compacted density, and so on; and it can avoid problems such as low voltage plateau that may be caused if the percentage of the element manganese is too small, so as to improve the energy density of the secondary battery.

In the positive electrode active material having a core-shell structure of the foregoing embodiment, limiting the percentage of the element phosphorus in the foregoing range can effectively avoid the following cases: if the percentage of the element phosphorus is too large, it may lead to the covalency of P-O being too strong and affecting the conductivity of small polarons, thus affecting the electrical conductivity of the material; and if the percentage of the element phosphorus is too small, it may result in decreased stability of the lattice structure of the pyrophosphate in the first coating layer and/or the phosphate in the second coating layer, thereby affecting the overall stability of the material.

In the positive electrode active material having a core-shell structure of the foregoing embodiment, limiting the weight ratio of the element manganese to the element phosphorus in the foregoing range can effectively avoid the following cases: if the weight ratio is too large, it may lead to an increase in the dissolution of the transition metal, affecting the stability of the material and the cycle and storage performance of the secondary battery; and if the weight ratio is too small, it may lead to a decrease in the discharge voltage plateau of the material, thereby reducing the energy density of the secondary battery.

In any embodiment of the first aspect, a lattice change rate of the positive electrode active material having a core-shell structure before and after complete deintercalation or intercalation of lithium is below 4%, optionally below 3.8%, and more optionally 2.0% to 3.8%. The positive electrode active material having a core-shell structure of the foregoing embodiment can achieve a lattice change rate below 4% before and after deintercalation or intercalation of lithium. Therefore, the use of the positive electrode active material can more effectively improve the gram capacity and rate performance of the secondary battery.

In any embodiment of the first aspect, a Li/Mn anti-site defect concentration of the positive electrode active material having a core-shell structure is below 4%, optionally below 2.2%, and more optionally from 1.5% to 2.2%. Limiting the Li/Mn anti-site defect concentration in the foregoing range can more effectively prevent Mn²⁺ from hindering Li⁺ transmission, and further improve the gram capacity and rate performance of the positive electrode active material.

In any embodiment of the first aspect, a compacted density under 3T (ton) of the positive electrode active material having a core-shell structure is greater than 2.2 g/cm³, and optionally greater than 2.2 g/cm³ and less than 2.8 g/cm³. Therefore, increasing the compacted density increases the weight of the active material per unit volume, which is more conducive to increasing the volumetric energy density of the secondary battery.

In any embodiment of the first aspect, a surface oxygen valence of the positive electrode active material having a core-shell structure is below -1.90, and optionally from -1.90 to -1.98. Therefore, limiting the surface oxygen valence of the positive electrode active material in the foregoing range can further mitigate the interfacial side reactions between the positive electrode material and the electrolyte, thereby improving the performance of the cell in terms of cycling, high temperature storage, and the like and suppressing gas production.

A second aspect of this application further provides a battery module, where the battery module includes a secondary battery, the secondary battery being any one of the foregoing secondary batteries of this application.

A third aspect of this application further provides a battery pack, where the battery pack includes a battery module, the battery module being the foregoing battery module of this application.

A fourth aspect of this application further provides an electric apparatus, where the electric apparatus includes at least one of a secondary battery, a battery module, or a battery pack, the secondary battery, the battery module, and the battery pack being the secondary battery, the battery module, and the battery pack provided in this application.

Therefore, the battery module and battery pack of this application have high cycling performance and rate performance, thus providing high kinetic cycle stability and rate performance for the electric apparatus having the secondary battery, battery module, or battery pack of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

The accompanying drawings are not drawn to scale.

Description of reference signs:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

Embodiments that specifically disclose a secondary battery, a battery module, a battery pack, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this specification, the term "coating layer" is a material layer enveloping the core, the material layer can completely or partially envelope the core, and the use of "coating layer" is only for ease of description but not intended to limit the present invention. Similarly, the term "thickness of the coating" refers to a thickness of the substance layer applied on the core in a radial direction of the core.

In this specification, the term "source" refers to a compound that is a source of an element. For example, types of "source" include but are not limited to carbonates, sulfates, nitrates, elementary substances, halides, oxides, and hydroxides.

### [Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charging and discharging of the battery, active ions (such as lithium ions) intercalate and deintercalate back and forth between the positive electrode plate and the negative electrode plate. The separator is sandwiched between the positive electrode plate and the negative electrode plate to mainly prevent short circuit between the positive and negative electrodes and to allow active ions to pass through. The electrolyte is between the positive electrode plate and the negative electrode plate, playing a role of conducting active ions.

A first aspect of the present invention provides a secondary battery. The secondary battery includes a positive electrode plate and a non-aqueous electrolyte, where the positive electrode plate includes a positive electrode active material having a core-shell structure. The positive electrode active material includes a core and a shell enveloping the core. A chemical formula of the core is Li₁₊ₓMn_{1-y}A_{y}P_{1-z}R_{z}O₄, where x is any value in the range of -0.100 to 0.100, y is any value in the range of 0.001 to 0.500, z is any value in the range of 0.001 to 0.100, A is one or more elements selected from Zn, Al, Na, K, Mg, Mo, W, Ti, V, Zr, Fe, Ni, Co, Ga, Sn, Sb, Nb, and Ge, optionally one or more elements from Fe, Ti, V, Ni, Co, and Mg, R is one or more elements selected from B, Si, N and S, optionally R being one element selected from B, Si, N and S, and the values of x, y, and z satisfy a condition that the entire core is made electrically neutral. The shell includes a first coating layer enveloping the core, a second coating layer enveloping the first coating layer, and a third coating layer enveloping the second coating layer, where the first coating layer includes a crystalline pyrophosphate LiaMP₂O₇ and/or Mb(P₂O₇)_{c}, where 0 ≤ a ≤ 2, 1 ≤ b ≤ 4, and 1 ≤ c ≤ 6, values of a, b, and c satisfy a condition of keeping the crystalline pyrophosphate LiaMP₂O₇ or Mb(P₂O₇)_{c} electrically neutral; and M in the crystalline pyrophosphate LiaMP₂O₇ and Mb(P₂O₇)_{c} each is independently one or more elements selected from Fe, Ni, Mg, Co, Cu, Zn, Ti, Ag, Zr, Nb and Al; the second coating layer includes a crystalline phosphate XPO₄, X being one or more elements selected from Li, Fe, Ni, Mg, Co, Cu, Zn, Ti, Ag, Zr, Nb and Al; and the third coating layer is carbon. The non-aqueous electrolyte includes an organic solvent, where the organic solvent includes a first solvent, the first solvent including one or more of compounds represented by formula 1:

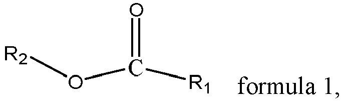

R₁ and R₂ each independently being one of C1 to C10 alkyl and C1 to C10 haloalkyl group, and optionally, R₁ and R₂ each independently being one of methyl group, ethyl group, propyl group, butyl group, pentyl group, hexyl group, fluoromethyl group, fluoroethyl group, fluoropropyl group, fluorobutyl group, fluoropentyl group, and fluorohexyl group, and further optionally, R₁ and R₂ each independently being one of methyl group, ethyl group, propyl group, fluoromethyl group, fluoroethyl group, and fluoropropyl group.

Unless otherwise specified, in the above chemical formula, when A is two or more elements, the foregoing limitation on the value range of y is not only a limitation on the stoichiometric number of each element as A but also a limitation on the sum of the stoichiometric numbers of all elements as A. For example, when A is two or more elements A1, A2, ..., An, the stoichiometric numbers y1, y2, ..., yn of all of A1, A2, ..., An must fall within the value range defined by this application for y, and the sum of y1, y2, ..., yn must also fall within the value range. Similarly, in a case that R is two or more elements, the limitation on the value range of the stoichiometric number of R in this application also has the foregoing meaning.

With the positive electrode active material having coating layers and the electrolyte having improved compositions, the secondary battery of this application not only effectively enhances the rate performance of the secondary battery but also improves the cycling performance of the secondary battery. Details are as follows:

The positive electrode active material of this application can improve the gram capacity, cycling performance, and safety performance of the secondary battery. Although the mechanism is still unclear, it is presumed that the lithium manganese phosphate positive electrode active material of this application is a core-shell structure. Doping element A and element R respectively on the manganese site and phosphorus site of the lithium manganese phosphate core can not only effectively reduce the dissolving-out amount of manganese, reduce the migration of manganese ions to the negative electrode, reduce the consumption of the electrolyte due to the decomposition of the SEI, and improve the cycling performance and safety performance of the secondary battery, but also promote the adjustment of the Mn-O bond, reduce the migration barrier of lithium ions, promote the migration of lithium ions, and improve the rate performance of the secondary battery. Enveloping the first coating layer including crystalline pyrophosphate on the core can further increase the migration resistance of manganese, reduce the dissolving-out amount of manganese, decrease the proportion of impurity lithium on the surface, and reduce the contact between the core and the electrolyte, thereby reducing interfacial side reactions, reducing gas produced, and improving high-temperature storage performance, cycling performance, and safety performance of the secondary battery. Further, coating the crystalline phosphate coating layer with an excellent ability to conduct lithium ions can effectively reduce the interfacial side reactions on the surface of the positive electrode active material, thus improving the high-temperature cycling and storage performance of the secondary battery. Further, coating the carbon layer as the third coating layer can further improve the safety performance and kinetic performance of the secondary battery.

In addition, the element A doping at the manganese site of lithium manganese phosphate in the core helps to reduce the lattice change rate of lithium manganese phosphate in the process of lithium deintercalation or intercalation, improve the structural stability of the lithium manganese phosphate positive electrode material, greatly reduce the dissolving-out amount of manganese, and reduce the oxygen activity on the surface of the particles. The element R doping at the phosphorus site also helps to change difficulty of the change of the Mn-O bond length, thereby improving the electronic conductivity, reducing the migration barrier of lithium ions, promoting the migration of lithium ions, and improving the rate performance of the secondary battery.

In addition, the entire core system is made electrically neutral, which can ensure that there are as few defects and heterophase structures in the positive electrode active material as possible. If there is an excess of transition metal (for example, manganese) present in the positive electrode active material, the excess transition metal is likely to precipitate out as an elementary substance or form heterophase structures inside the lattice due to the inherently stable structure of the material system. Therefore, making the system electrically neutral can minimize such heterophase structures. In addition, ensuring the electrical neutrality of the system can also lead to lithium vacancies in the material in some cases, resulting in better kinetic performance.

It can be seen that this application provides a new type of lithium manganese phosphate positive electrode active material having a core-shell structure by doping element A at the manganese site and element R at the phosphorus site of lithium manganese phosphate to obtain a doped lithium manganese phosphate core and applying three coatings sequentially on the core surface. Applying the positive electrode active material to a secondary battery can significantly improve the high-temperature cycling performance, cycling stability, and high-temperature storage performance of the secondary battery.

In addition, the first solvent in the non-aqueous electrolyte has a good ability to dissociate lithium salts, but compared with carbonate, the first organic solvent has little interaction with Li+; and as the first solvent gradually dominates a first solvation shell, the desolvation energy of Li⁺ gradually decreases, which is conducive to the rapid deintercalation and intercalation of Li⁺ at the interface, thereby improving the rate performance of the secondary battery. In addition, the first solvent has a low viscosity, which enables the lithium ions deintercalated from the positive electrode active material to rapidly migrate and intercalate in the negative electrode side, and under the driving of concentration polarization, enables the lithium ions at the interface of the positive electrode material to be rapidly transferred into the electrolyte, further improving the rate performance of the secondary battery.

### [Non-aqueous electrolyte]

The first solvent for use in this application may be any carboxylate covered by the foregoing formula 1, and in some embodiments, the foregoing first solvent includes at least one of the following compounds:

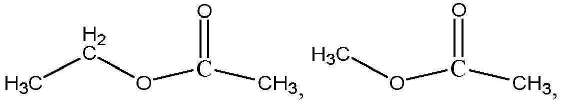

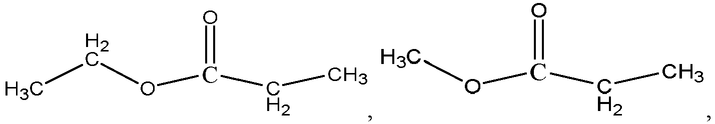

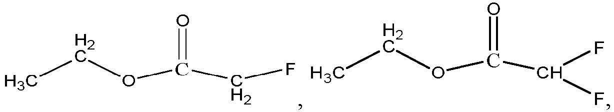

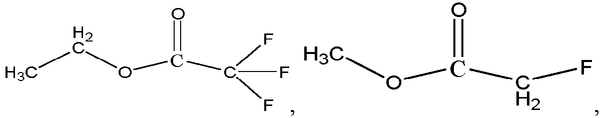

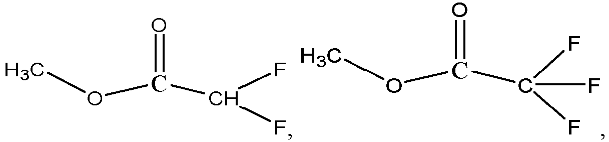

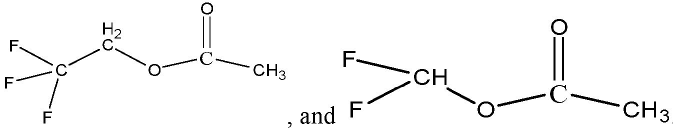

In some embodiments, optionally, the first solvent includes at least one of the following compounds:

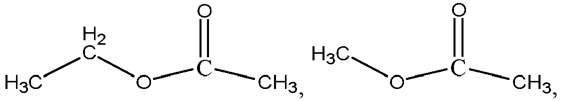

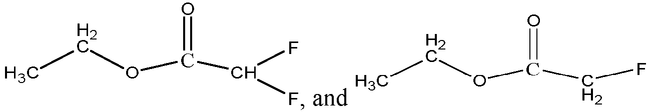

When the foregoing substances are selected as the first solvent, the electrolyte has lower viscosity and better wettability, and thus has better lithium ion transport ability, such that the rate performance of the secondary battery better is better improved, and in addition, the foregoing first solvents have better chemical stability and better oxidation resistance to the positive electrode active material.

Although the first solvent has the advantage of low viscosity and high conductivity, it is prone to chemical reaction with the positive and negative electrodes of the secondary battery, which in turn affects the cycling performance of the secondary battery. In some embodiments, a mass percentage of the first solvent is w1 based on total mass of the organic solvent, and w1 ranges from 20% to 80% (for example, 20%, 25%, 30%, 35%, 40%, 45%, 50%, 55%, 60%, 65%, 70%, 75%, or 80%); and optionally, w1 ranges from 30% to 75%. By controlling the mass percentage as described above, it is possible to use the first solvent to improve the fast charge performance of the battery while providing the secondary battery with good cycling performance and storage performance.

In this application, when the first solvent is used as the solvent of the non-aqueous electrolyte, to ensure that the secondary battery has as high cycling performance and storage performance as possible, in some embodiments, optionally, the organic solvent further includes a second solvent, where the second solvent includes one or more from a group consisting of a linear carbonate and a cyclic carbonate; and further optionally, a mass percentage of the second solvent is w2 based on total mass of the organic solvent, w2 ranging from 20% to 80% (for example, 20%, 25%, 30%, 35%, 40%, 45%, 50%, 55%, 60%, 65%, 70%, 75%, or 80%), and optionally, w2 ranging from 25% to 70%. The second solvent can work together with the first solvent to improve the cycling performance of the secondary battery.

The types of the linear carbonate and cyclic carbonate of the foregoing second solvent are not particularly limited, and can be selected depending on actual needs; and optionally, the second solvent may include one or more of dimethyl carbonate, diethyl carbonate, dipropyl carbonate, ethyl methyl carbonate, methyl propyl carbonate, ethylene propyl carbonate, ethylene carbonate, propylene carbonate, butylene carbonate, gamma-butyrolactone, methyl formate, ethyl formate, methyl acetate, ethyl acetate, propyl acetate, methyl propionate, ethyl propionate, and methyl propionate.

In some embodiments of the first aspect, the solvent of the non-aqueous electrolyte may also include common solvents such as tetrahydrofuran, 1,4-butyrolactone, sulfolane, dimethylsulfone, methyl ethyl sulfone, and diethylsulfone. Details are not repeated herein.

Typically, the non-aqueous electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

Furthermore, in some embodiments, the foregoing non-aqueous electrolyte further includes a first additive, the first additive including one or more from a group consisting of sultone and cyclic sulfate. The sultone or cyclic sulfate introduced into the non-aqueous electrolyte forms a layer of polymer with strong ion conductivity, for example, an ester-based sulfate, on the surface of the positive electrode active material during charge of the secondary battery. The polymer can further improve the rate performance of the secondary battery, and can also effectively inhibit the catalytic oxidation of the positive electrode active material to the first solvent, thereby improving the cycling performance and storage performance of the secondary battery. In addition, the sultone or cyclic sulfate is superior to the first solvent in forming a film at the negative electrode, reducing the reaction of α-H on the first solvent with the active lithium obtained by reduction at the negative electrode, thereby further improving the cycling performance and storage performance of the secondary battery.

The sultone and the cyclic sulfate for use in the foregoing embodiments of this application may be the corresponding substances commonly used in the prior art. In some embodiments, the sultone includes at least one of compounds represented by formula 2: 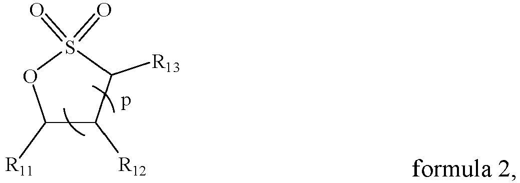 where
p represents 1, 2 or 3;
Rn is one of a hydrogen atom, halogen atom, C1 to C12 alkyl group, C1 to C12 haloalkyl group, C1 to C12 alkoxy group, and C1 to C12 haloalkoxy group; optionally R₁₁ is one of a hydrogen atom, halogen atom, C1 to C6 alkyl group, C1 to C3 haloalkyl group, C1 to C3 alkoxy group, and C1 to C3 haloalkoxy group; optionally the alkoxy is linear alkoxy or cyclic alkoxy; optionally the cyclic alkoxy shares one carbon atom with a parent ring of the sultone, and further optionally the cyclic alkoxy has 4, 5, or 6 carbon atoms;
each R12 is independently one of a hydrogen atom, halogen atom, C1 to C12 alkyl group, C1 to C12 haloalkyl group, C1 to C12 alkoxy group, C1 to C12 haloalkoxy group, and 4- to 7-membered sultone group; optionally each R12 is independently one of a hydrogen atom, halogen atom, C1 to C3 alkyl group, C1 to C3 haloalkyl group, C1 to C3 alkoxy group, C1 to C3 haloalkoxy group, and 5- to 6-membered sultone group; optionally the sultone group shares one carbon atom with the parent ring of the sultone, and optionally the sultone group is a 5-membered ring;
R₁₁ and R₁₂ each form a 5- to 10-membered cycloalkyl group with respective carbon atoms bonded thereto; and
R₁₃ is one of a hydrogen atom, halogen atom, carbonyl group, C2 to C6 ester group, C1 to C12 alkyl group, C1 to C12 haloalkyl group, C2 to C12 alkenyl group, C1 to C12 alkoxy group, C1 to C12 haloalkoxy group, and C6 to C20 aryl group or benzyl group; and optionally, R₁₃ is one of a hydrogen atom, halogen atom, carbonyl group, C2 to C3 ester group, C1 to C3 alkyl group, C1 to C3 haloalkyl group, C2 to C6 alkenyl group, C1 to C3 alkoxy group, C1 to C3 haloalkoxy group, and C6 to C10 aryl group or benzyl group.

The foregoing sultone is a sultone commonly used in the art which is widely available at a relatively low cost.

In some embodiments, the foregoing cyclic sulfate includes at least one of compounds represented by formula 3, 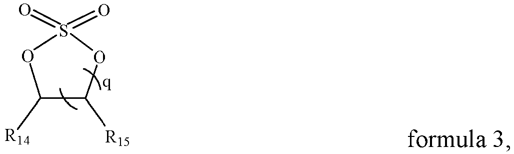 where
q represents 1, 2 or 3;
R₁₄ is one of a hydrogen atom, halogen atom, carbonyl group, C1 to C12 alkyl group, C1 to C12 haloalkyl group, C2 to C12 alkenyl group, C1 to C12 alkoxy group, C1 to C12 haloalkoxy group, C2 to C6 ester group, and 4- to 7-membered cyclic sulfate group; optionally R₁₄ is one of a hydrogen atom, halogen atom, carbonyl group, double bond, C1 to C6 alkyl group, C1 to C3 haloalkyl group, C1 to C3 alkoxy group, C1 to C3 haloalkoxy group, C2 to C3 easter group, and 4- to 5-membered cyclic sulfate group; and optionally the cyclic sulfate group shares one carbon atom with the cyclic sulfate;
each R₁₅ is independently one of a hydrogen atom, halogen atom, C1 to C12 alkyl group, C1 to C12 haloalkyl group, C1 to C12 alkoxy group, C1 to C12 haloalkoxy group, and C6 to C20 aryl group; and optionally each R₁₅ is independently one of a hydrogen atom, halogen atom, C1 to C6 alkyl group, C1 to C3 haloalkyl group, C1 to C3 alkoxy group, C1 to C3 haloalkoxy group, and C6 to C10 aryl group; or
R₁₄ and R₁₅ each form a 4- to 7-membered cyclic sulfate group together with respective carbon atoms bonded thereto, and further optionally R₁₄ and R₁₅ each form a 5-membered cyclic sulfate group together with respective carbon atoms bonded thereto.

The foregoing cyclic sulfate is a cyclic sulfate commonly used in the art which is widely available at a low cost.

In some embodiments, optionally, the sultone includes at least one of the following compounds:

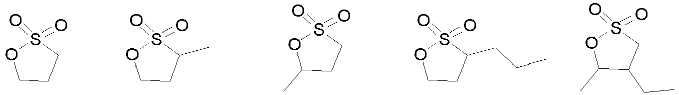

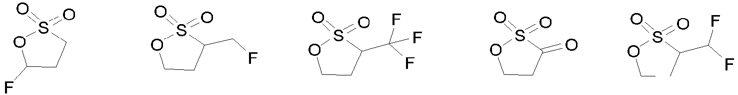

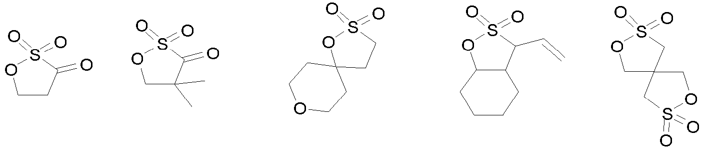

In some embodiments, optionally, the cyclic sulfate includes at least one of the following compounds:

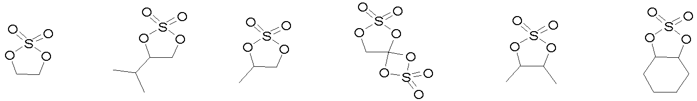

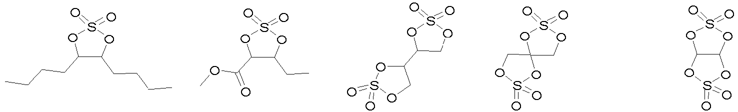

Further optionally, the sultone includes at least one of the following compounds:

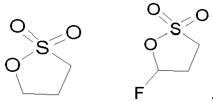

Further optionally, the cyclic sulfate includes at least one of the following compounds:

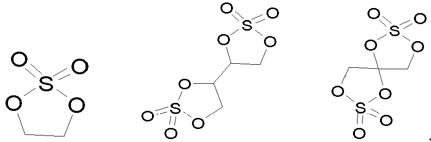

The above sultone and cyclic sulfate can more easily form a polymer at the positive electrode.

Compared with the first solvent, although the sultone and the cyclic sulfate may improve the cycling performance and storage performance of the secondary battery, if they are used too much, they may cause the impedance of the positive and negative electrodes of the secondary battery to increase, affecting the rate performance of the secondary battery. Persons skilled in the art can select the amounts of the sultone and the cyclic sulfate used in the non-aqueous electrolyte of this application by consulting the conventional amounts of sultone and cyclic sulfate. In some embodiments, a percentage of the foregoing first additive is W3 based on total mass of the non-aqueous electrolyte, and 0.01% ≤ W3 ≤ 20% (for example, 0.01%, 0.05%, 0.1%, 0.2%, 0.5%, 1%, 2%, 3%, 4%, 5%, 10%, 15%, or 20%), optionally 0.1% ≤ W3 ≤ 10%, and further optionally 0.3% ≤ W3 ≤ 5%. On the basis of effective inhabitation of the degradation of the cycling performance caused by the first solvent, this avoids the increase in impedance of the positive and negative electrode caused by the introduction of excessive sultone or cyclic sulfate, guaranteeing a significant improvement in the capacity and rate performance of the lithium-ion battery.

In some embodiments, the non-aqueous electrolyte for use in this application further includes a second additive, the second additive including one or more from a group consisting of a sulfite compound, disulfonate compound, nitrile compound, aromatic compound, phosphazene compound, anhydride compound, phosphite compound, phosphate compound, and borate compound. The second additive helps to form a denser and more stable interfacial film on the surface of the positive electrode and/or negative electrode active material, thereby further improving at least one of the cycling performance, the storage performance, and the rate performance of the secondary battery.

In some embodiments, a percentage of the second additive is W4 based on total mass of the non-aqueous electrolyte and 0.01% ≤ W4 ≤ 20%, optionally 0.05% ≤ W4 ≤ 5%, and further optionally 0.1% ≤ W4 ≤ 3%. Such percentage range enables the second additive to be fully functioned.

Some of these second additives are illustrated below.

### Sulfite compound

The sulfite compound is preferably a cyclic sulfite compound, and specifically may be one or more selected from compounds represented by formula 4.

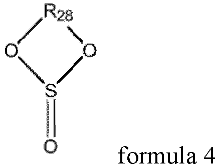

In formula 4, R₂₈ is selected from substituted or unsubstituted C1 to C6 alkylene group or substituted or unsubstituted C2 to C6 alkenylene group, where the substituent group is one or more selected from halogen atom, C1 to C3 alkyl group, and C2 to C4 alkenyl group.

In formula 4, optionally, R₂₈ is selected from substituted or unsubstituted C1 to C4 alkylidene group and substituted or unsubstituted C2 to C4 alkenyl group, where the substituent group is one or more selected from halogen atom, C1 to C3 alkyl group, and C2 to C4 alkenyl group.

Optionally, the sulfite compound may be one or more selected from ethylene sulfite (ES for short), propylene sulfite (PS for short), and butylene sulfite (BS for short).

### Disulfonate compound

The disulfonate compound is a compound containing two sulfonic acid groups (-S(=O)₂O-), preferably selected from a methylene disulfonate compound, and the methylene disulfonate compound may be one or more selected from compounds represented by formula 5. In formula 5, R₂₄, R₂₅, R₂₆, and R₂₇ are each independently selected from hydrogen atom, halogen atom, substituted or unsubstituted C1 to C10 alkyl group, and substituted or unsubstituted C2 to C10 alkenyl group, where the substituent group is one or more selected from halogen atom, C1 to C3 alkyl group, and C2 to C4 alkenyl group.

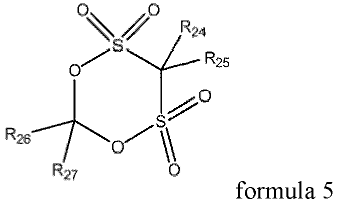

In Formula 5, optionally, R₂₄, R₂₅, R₂₆, R₂₇ are each independently selected from hydrogen atom, halogen atom, substituted or unsubstituted C1 to C4 alkyl group, and substituted or unsubstituted C2 to C6 alkenyl group, where the substituent group is one or more selected from halogen atom, C1 to C3 alkyl group, and C2 to C4 alkenyl group.

Optionally, the disulfonate compound may specifically be one or more selected from the following compounds, but this application is not limited thereto:

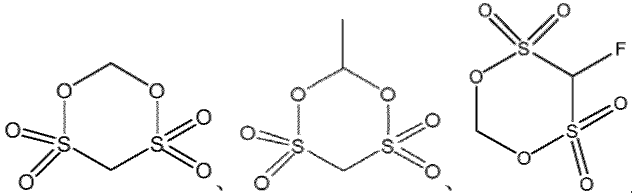

Further optionally, the disulfonate compound may be selected from a methane methylene disulfonate (MMDS for short), with the following specific structure:

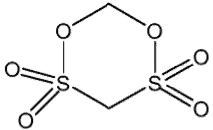

### Nitrile compound

The nitrile compound may be any one or more of compounds illustrated in formula 6 or formula 7:

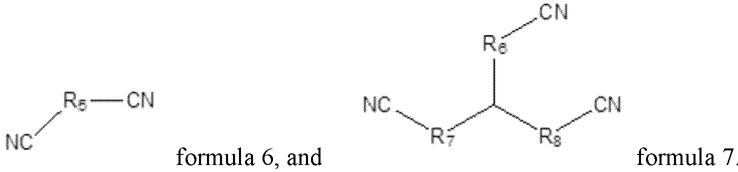

In formula 6 and formula 7, R₅ is selected from substituted or unsubstituted C1 to C12 alkylene group, substituted or unsubstituted C2 to C12 alkenylene group, and substituted or unsubstituted C2 to C12 alkynylene group, and R₆, R₇, and R₈ each are one or more independently selected from substituted or unsubstituted C0 to C12 alkylene group, substituted or unsubstituted C2 to C12 alkenylene group, and substituted or unsubstituted C2 to C12 alkynylene group, where the substituent group is one or more selected from halogen atom, nitrile group, a C1 to C6 alkyl group, C2 to C6 alkenyl group, and C1 to C6 alkoxy group. Optionally, R₅ is selected from substituted or unsubstituted C1 to C10 alkylene group, substituted or unsubstituted C2 to C10 alkenylene group, and substituted or unsubstituted C2 to C10 alkynylene group, and R₆, R₇, and R₈ each are one or more independently selected from substituted or unsubstituted C0 to C10 alkylene group, substituted or unsubstituted C2 to C10 alkenylene group, and substituted or unsubstituted C2 to C10 alkynylene group, where the substituent group is selected from halogen atom.

Optionally further, in formula 6, R₅ is selected from C₁ to C₆ alkylene group, C₂ to C₆ alkenylene group, and C₂ to C₆ alkynylene group, and optionally, R₅ is selected from C₂ to C₄ alkylene group, C₂ to C₄ alkenylene group, and C₂ to C₄ alkynylene group; and in formula 7, R₆, R₇, and R₈ are each independently selected from C₀ to C₆ alkylene group, C₂ to C₆ alkenylene group, and C₂ to C₆ alkynylene group, and optionally, R₆ is selected from C₀ to C₁ alkylene group, and R₇, R₈ are each independently selected from C₂ to C₄ alkylene group, C₂ to C₄ alkenylene group, and C₂ to C₄ alkynylene group.

In some embodiments, the foregoing nitrile compound is one or more selected from ethanonitrile, succinonitrile, glutaronitrile, adiponitrile, pimelonitrile, suberonitrile, azelanitrile, sebaconitrile, undecanedinitrile, dodecanedinitrile, tetramethylsuccinonitrile, methylglutaronitrile, butenedinitrile, 2-pentenedinitrile, hexyl-2-enedinitrile, hexyl-3-enedinitrile, octyl-4-enedinitrile, octyl-4-enedinitrile, 1,2,3-propanetricarbonitrile, 1,3,5-pentanetricarbonitrile, and 1,3,6-hexanetricarbonitrile.

### Aromatic compound

The aromatic compound may be one or more selected from cyclohexylbenzene, fluorocyclohexylbenzene compounds (1-fluoro-2-cyclohexylbenzene, 1-fluoro-3-cyclohexylbenzene, and 1-fluoro-4-cyclohexylbenzene), tert-butylbenzene, tert-amyl benzene, 1-fluoro-4-tert-butylbenzene, biphenyl, terphenyl (ortho-position, meta-position, and para-position), diphenyl ether, fluorobenzene, difluorobenzene (ortho-position, meta-position, and para-position), anisole, 2,4-difluoroanisole, and some hydrides of terphenyl (1,2-dicyclohexylbenzene, 2-phenylbicyclohexyl, 1,2-diphenylcyclohexane, and o-cyclohexylbiphenyl).

Optionally, the aromatic compound may be one or more selected from biphenyl, triphenyl (ortho-position, meta-position, and para-position), fluorobenzene, cyclohexylbenzene, tert-butylbenzene, and tert-amylbenzene, and further optionally the aromatic compound may be one or more selected from biphenyl, o-terphenyl, fluorobenzene, cyclohexylbenzene, and tert-amylbenzene.

### Phosphazene compound

The phosphazene compound is preferably a cyclic phosphazene compound. The cyclic phosphazene compound may be selected from one or more of methoxypentafluorocyclotriphosphazene, ethoxypentafluorocyclotriphosphazene, phenoxypentafluorocyclotriphosphazene, and ethoxyheptafluorocyclotriphosphazene.

Optionally, the cyclic phosphazene compound may be selected from one or more of methoxypentafluorocyclotriphosphazene, ethoxypentafluorocyclotriphosphazene, and phenoxypentafluorocyclotriphosphazene.

Further optionally, the cyclic phosphazene compound may be selected from methoxypentafluorocyclotriphosphazene or ethoxypentafluorocyclotriphosphazene.

### Anhydride compound

The anhydride compound may be linear anhydride or cyclic anhydride. Specifically, the anhydride compound may be one or more selected from acetic anhydride, propionic anhydride, succinic anhydride, maleic anhydride, 2-allyl succinic anhydride, glutaric anhydride, itaconic anhydride, and 3-sulfo-propionic anhydride.

Optionally, the anhydride compound may be one or more selected from succinic anhydride, maleic anhydride, and 2-allyl succinic anhydride. Further optionally, the anhydride compound may be one or two selected from succinic anhydride and 2-allyl succinic anhydride.

### Phosphite compound

The phosphite compound may be one or more selected from a silane phosphite compound, specifically may be one or more selected from compounds represented by formula 8. In formula 8, R₃₁, R₃₂, R₃₃, R₃₄, R₃₅, R₃₆, R₃₇, R₃₈, and R₃₉ are each independently selected from halogen substituted or unsubstituted C1 to C6 alkyl group.

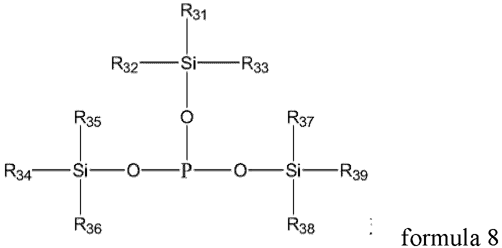

Optionally, the silane phosphite compound may specifically be one or more selected from the following compounds, but this application is not limited thereto:

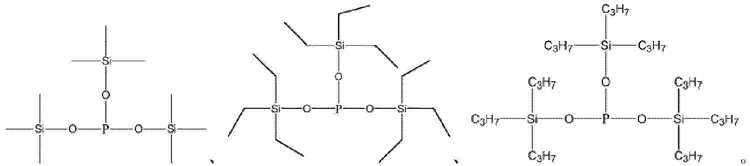

### Phosphate compound

The phosphate compound may be one or more selected from a silane phosphate compound, specifically may be one or more selected from compounds represented by formula 9. In formula 9, R₄₁, R₄₂, R₄₃, R₄₄, R₄₅, R₄₆, R₄₇, R₄₈, and R₄₉ are each independently selected from halogen substituted or unsubstituted C1 to C6 alkyl group.

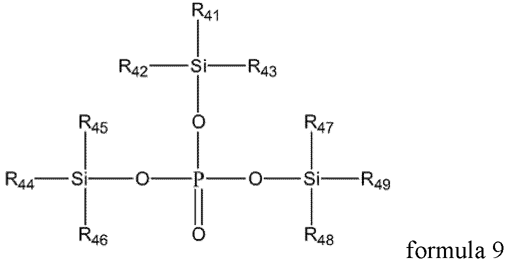

Optionally, the silane phosphate compound may specifically be one or more selected from the following compounds, but this application is not limited thereto:

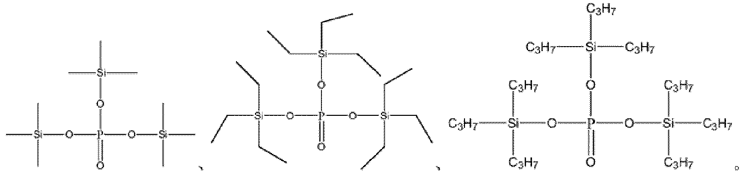

### Borate compound

The borate compound may be one or more selected from a silane borate compound, specifically may be one or more selected from compounds represented by formula 10. In formula 10, R₅₁, R₅₂, R₅₃, R₅₄, R₅₅, R₅₆, R₅₇, R₅₈, and R₅₉ are each independently selected from halogen substituted or unsubstituted C1 to C6 alkyl group.

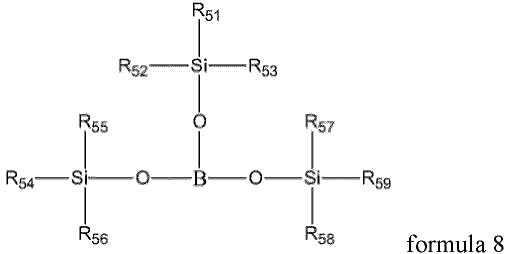

Optionally, the silane borate compound may specifically be one or more selected from the following compounds, but this application is not limited thereto:

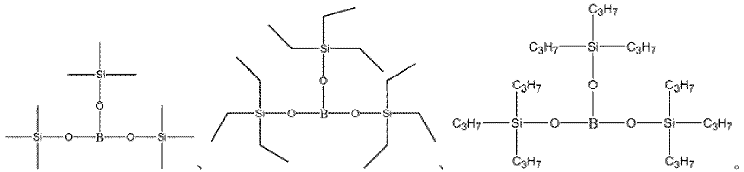

In addition, the non-aqueous electrolyte in the secondary battery of this application further includes a lithium salt, and the type of the lithium salt is not particularly limited and may be selected depending on actual needs. For example, the lithium salt may be selected from one or more of (C_{x'} F_{2x'+i}SO₂)(C_{y'}F_{2y'+1}SO₂), LiPF₆, LiBF₄, LiBOB, LiAsF₆, Li(FSO₂)₂N, LiCF₃SO₃ and LiClO₄, where x' and y' are natural numbers, for example, x' and y' are each independently 0, 1, 2, 3, 4, 5 or 6. In some embodiments, the concentration of the foregoing lithium salt ranges from 0.5 mol/L to 2.5 mol/L, preferably from 0.8 mol/L to 2 mol/L.

### [Positive electrode plate]

The positive electrode plate typically includes a positive electrode current collector and a positive electrode film layer provided on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In the foregoing positive electrode active material having a core and a shell enveloping the core in the secondary battery of this application, the positions of the main characteristic peaks in the XRD plots of lithium manganese phosphate doped with element A and element R are consistent with those of undoped LiMnPO₄, indicating that no heterophase structure is introduced in the doping process. Therefore, the improvement on the performance of the core mainly comes from element doping rather than heterophase structures. After the foregoing positive electrode active material is prepared, the inventors of this application cut the middle region of the prepared positive electrode active material particles by focused ion beam (FIB for short). Tests conducted through transmission electron microscope (TEM for short) and X-ray energy spectrum analysis (EDS for short) show that the elements are uniformly distributed without aggregation.

In an optional embodiment, when A is one, two, three, or four elements selected from Zn, Al, Na, K, Mg, Mo, W, Ti, V, Zr, Fe, Ni, Co, Ga, Sn, Sb, Nb, and Ge, A_{y} is Qₙ₁Dₙ₂Eₙ₃Kₙ₄, where n1+n2+n3+n4=y, n1, n2, n3, and n4 are all positive numbers but are not all zero, Q, D, E, and K are each independently one selected from Zn, Al, Na, K, Mg, Mo, W, Ti, V, Zr, Fe, Ni, Co, Ga, Sn, Sb, Nb, and Ge, and optionally, at least one of Q, D, E, and K is Fe. Optionally, one of n1, n2, n3, and n4 is zero and the rest is non-zero; more optionally, two of n1, n2, n3, and n4 are zero and the rest is non-zero; and further optionally, three of n1, n2, n3, and n4 are zero and the rest is non-zero. In the core Li₁₊ₓMn_{1y}A_{y}P_{1-z}R_{z}O₄, it is advantageous to dope one, two, three, or four of the foregoing elements A at the manganese site, optionally, dope one, two, or three of the foregoing elements A. Furthermore, it is advantageous to dope one or two elements R at the phosphorus site, which facilitates a uniform distribution of the doping elements.

In the core Li₁₊ₓMn_{1-y}A_{y}P_{1-z}R_{z}O₄, the magnitude of x is influenced by the magnitude of the valences of A and R and the magnitudes of y and z so as to ensure that the entire system is electrically neutral. If the value of x is too small, the lithium content of the entire core system decreases, which affects the gram capacity utilization of the material. The y value limits the total amount of all doping elements. A too-small y value, that is, an excessively low doping amount, makes the doping elements useless, and y being more than 0.5 leads to less Mn content in the system and affects the voltage plateau of the material. The element R dopes at P site. Because the P-O tetrahedron is relatively stable and a too-large z value affects the stability of the material, the z value is limited in the range of 0.001 to 0.100.

Process control (for example, thoroughly mixing and grinding of the materials of various sources) can ensure that the elements are uniformly distributed in the lattice without aggregation. The positions of the main characteristic peaks in the XRD plots of lithium manganese phosphate doped with element A and element R are consistent with those of undoped LiMnPO₄, indicating that no heterophase structure was introduced in the doping process. Therefore, the improvement on the performance of the core mainly comes from element doping rather than heterophase structures. After the positive electrode active material described in this application is prepared, the inventors of this application cut the middle region of the prepared positive electrode active material particles by focused ion beam (FIB for short). Tests conducted through transmission electron microscope (TEM for short) and X-ray energy spectrum analysis (EDS for short) show that the elements are uniformly distributed without aggregation.

In this application, the crystalline means that the crystallinity is above 50%, to be specific, being 50% to 100%. A crystallinity less than 50% is referred to as a glassy state. The crystalline pyrophosphate and crystalline phosphate in this application have a crystallinity of 50% to 100%. The pyrophosphate and phosphate with a certain crystallinity are not only conducive to giving full play to the ability of the pyrophosphate coating layer in hindering the manganese ion dissolution and the ability of the phosphate coating layer in conducting lithium ions, reducing the interfacial side reactions, but also enables the pyrophosphate coating layer and the phosphate coating layer to be better lattice matched, such that a tighter bond between the coating layers can be achieved.

In this application, the crystallinity of the crystalline pyrophosphate in the first coating layer substance and the crystalline phosphate in the second coating layer substance of the positive electrode active material can be tested by using conventional technical means in the art, for example, by using density, infrared spectroscopy, differential scanning calorimetry, and nuclear magnetic resonance absorption methods, and also by, for example, X-ray diffraction.

A specific method of testing the crystallinity of the crystalline pyrophosphate in the first coating layer and the crystalline phosphate in the second coating layer of the positive electrode active material by using X-ray diffraction can include the following steps:
taking a specific amount of the positive electrode active material powder, and measuring a total scattering intensity by X-ray, where the total scattering intensity is a sum of scattering intensities of substances in the entire space and is only related to the intensity of the primary rays, the chemical structure of the positive electrode active material powder, a total number of electrons participating in the diffraction, that is, the mass, but not related to the order state of the sample; and separating crystalline scattering from non-crystalline scattering in the diffractogram, where the crystallinity is a ratio of a scattering intensity of the crystalline part to the total scattering intensity.

It should be noted that in this application, the crystallinity of the pyrophosphate and phosphate in the coating can be adjusted, for example, by adjusting the process conditions such as sintering temperature and sintering time of the sintering process.

In this application, metal ions are difficult to migrate in the pyrophosphate, and therefore the pyrophosphate, as the first coating layer, can effectively isolate doping metal ions from the electrolyte. The crystalline pyrophosphate has a stable structure, so coating with the crystalline pyrophosphate can effectively suppress the dissolution of transition metals and improve the cycling performance.

The bond between the first coating layer and the core is similar to a heterojunction, and the firmness of the bond is limited by the degree of lattice match. When the lattice mismatch is below 5%, the lattice match is better and the two are easily bound tightly. The tight bond can ensure that the coating layer does not detach from the core in the subsequent cycle process, which is beneficial to ensure the long-term stability of the material. The degree of bond between the first coating layer and the core is mainly measured by calculating the degree of mismatch between the core and each lattice constant of the coating. In this application, compared with the core doped with no elements, the core doped with elements A and R has an increased match with the first coating layer, and the core can be more tightly bonded to the pyrophosphate coating layer.

Crystalline phosphate is selected as the second coating layer because it has a relatively high lattice match with the coating substance crystalline pyrophosphate of the first coating layer (the mismatch is only 3%), and in addition, the phosphate itself has better stability than the pyrophosphate. Therefore, using the phosphate as a coating for the pyrophosphate is beneficial to improve the stability of the material. Crystalline phosphate has a stable structure and an excellent ability to conduct lithium ions. Therefore, using crystalline phosphate as a coating can effectively reduce the interfacial side reactions on the surface of the positive electrode active material, thereby improving the high-temperature cycling and storage performance of the secondary battery. The lattice match method and the like between the second coating layer and the first coating layer are similar to the bond between the first coating layer and the core. When the lattice mismatch is below 5%, the lattice match is better, and the second coating layer and the first coating layer are easily bonded tightly.

The main reason for selecting carbon as the third coating layer is that the carbon layer has good electronic conductivity. An electrochemical reaction occurs when carbon is applied in secondary batteries, which requires the participation of electrons. Therefore, to promote the electron transport between particles and the electron transport at different positions on the particles, carbon with excellent electrical conductivity can be used for coating of the positive electrode active material. Carbon enveloping can effectively improve the electrical conductivity and desolvation of the positive electrode active material.

In this application, each coating layer may envelope fully or partially.

In some embodiments, an application amount of the first coating layer is C1wt% based on weight of the core, C1 being greater than 0 and less than or equal to 6, optionally greater than 0 and less than or equal to 5.5, and further optionally greater than 0 and less than or equal to 2; and/or an application amount of the second coating layer is C2wt% based on the weight of the core, C2 being greater than 0 and less than or equal to 6, optionally greater than 0 and less than or equal to 5.5, and more optionally being 2 to 4; and/or an application amount of the third coating layer is C3wt% based on the weight of the core, C3 being greater than 0 and less than or equal to 6, optionally greater than 0 and less than or equal to 5.5, and more optionally greater than 0 and less than or equal to 2.

In this application, the application amount of each layer is not zero.

In the positive electrode active material having a core-shell structure of the foregoing embodiment, the application amounts of the three coating layers are preferably within the foregoing ranges, and therefore the core can be fully enveloped and the kinetic performance and safety performance of the secondary battery can be further improved without reducing the gram capacity of the positive electrode active material.

For the first coating layer, limiting an application amount within the foregoing range can avoid the following cases: if the application amount is too small, it means that the thickness of the coating layer is relatively thin and the migration of the transition metal may not be effectively hindered; and if the application amount is too large, it means that the coating layer is too thick, which may affect the migration of the Li⁺, and thus affecting the rate performance of the material.

For the second coating layer, limiting an application amount in the foregoing range can avoid the following cases: if the application amount is too large, the overall platform voltage of the material may be affected; and if the application amount is too small, a sufficient enveloping effect may not be realized.

For the third coating layer, the carbon coating mainly promotes the electron transfer between the particles. However, because the structure also contains a large amount of amorphous carbon, the density of carbon is low. Therefore, if the application amount is too large, the compacted density of the electrode plate may be affected.

In the positive electrode active material having a core-shell structure of the foregoing embodiment, the application amounts of the three coating layers are preferably within the foregoing ranges, and therefore the core can be fully enveloped and the kinetic performance and safety performance of the secondary battery can be further improved without reducing the gram capacity of the positive electrode active material.

In any embodiment, the crystalline pyrophosphate in the first coating layer has an interplanar spacing in the range of 0.293 nm to 0.470 nm and an included angle in the range of 18.00° to 32.00° in the [111] crystal orientation; and the crystalline phosphate in the second coating layer has an interplanar spacing in the range of 0.244 nm to 0.425 nm and an included angle in the range of 20.00° to 37.00° in the [111] crystal orientation.

The crystalline pyrophosphate and crystalline phosphate in the coating layers may be characterized by means of conventional technical means in the art, or may be characterized, for example, by means of transmission electron microscopy (TEM). Under the TEM, the core and the coating layer can be distinguished by measuring the interplanar spacing.

The specific method of measuring the interplanar spacing and included angle of the crystalline pyrophosphate and the crystalline phosphate in the coating layers can include the following steps:
taking a specific amount of enveloped positive electrode active material sample powder in a test tube, injecting the test tube with a solvent such as alcohol, and stirring and dispersing the mixture thoroughly; taking an appropriate amount of the resulting solution with a clean disposable plastic pipette, and dropping the solution on a 300-mesh copper grid, part of the powder remaining on the copper grid at that point; transferring the copper grid together with the sample to the TEM sample cavity for testing, obtaining an original picture under the TEM test; and saving the original picture.

The original picture obtained in the TEM test is opened in the diffractometer software, Fourier transform is performed to get a diffraction pattern, a distance from a diffraction spot to the center of the diffraction pattern is measured to get the interplanar spacing, and the included angle is calculated according to the Bragg equation.

The range of interplanar spacing of crystalline pyrophosphate differs from that of crystalline phosphate, and it can be directly determined by the values of the interplanar spacings.

Both the first coating layer and the second coating layer in the positive electrode active material of the foregoing embodiments use crystalline substances whose interplanar spacing and included angle range are in the foregoing ranges. In this way, the heterophase structures in the coating layer can be effectively avoided, thereby increasing the gram capacity of the material and improving the cycling performance and rate performance. In addition, the crystalline pyrophosphate and crystalline phosphate having the interplanar spacing and included angle in the preceding ranges can more effectively suppress the lattice change rate and manganese ion dissolution of the lithium manganese phosphate during deintercalation or intercalation of lithium, thereby enhancing the high-temperature cycling performance, cycling stability, and high-temperature storage performance of the secondary battery.

In some embodiments, a ratio of y to 1-y in the core ranges from 1:10 to 1:1, and optionally from 1:4 to 1:1. The energy density and cycling performance of the secondary battery using the positive electrode active material can be further improved when the preceding conditions are met.

In some embodiments, a ratio of z to 1-z in the core ranges from 1:9 to 1:999, and optionally from 1:499 to 1:249. Herein, z denotes the sum of the stoichiometric numbers of element R doping at P site. The energy density and cycling performance of the secondary battery using the positive electrode active material can be further improved when the preceding conditions are met.

In some embodiments, the carbon of the third coating layer is a mixture of SP2 carbon and SP3 carbon; and optionally, a molar ratio of the SP2 carbon to the SP3 carbon is any value in the range of 0.1 to 10, and optionally, any value in the range of 2.0 to 3.0.

In some embodiments, a molar ratio of SP2 carbon to SP3 carbon may be about 0.1, about 0.2, about 0.3, about 0.4, about 0.5, about 0.6, about 0.7, about 0.8, about 0.9, about 1, about 2, about 3, about 4, about 5, about 6, about 7, about 8, about 9, or about 10, or in any range defined by any of these values.

In this application, being "about" a value indicates a range of ±10% of that value.

By selecting the morphology of carbon in the carbon coating layer, the overall electrical performance of the secondary battery can be improved. Specifically, by using a mixture of SP2 carbon and SP3 carbon and limiting the ratio of SP2 carbon to SP3 carbon to a certain range, the following situations can be avoided: if the carbon in the coating layer is all in the amorphous SP3 morphology, the electrical conductivity is poor; and if the carbon in the coating layer is all in the graphitized SP2 morphology, although the electrical conductivity is good, the quantity of lithium ion pathways is small, which is not conducive to the deintercalation of the lithium. In addition, limiting the molar ratio of SP2 carbon to SP3 carbon to the foregoing range, good electrical conductivity can be achieved and lithium ion pathways can also be ensured, so this is beneficial to the function optimization and cycling performance improvement of the secondary battery.

The mixing ratio of SP2 carbon to SP3 carbon of the third coating layer can be controlled by sintering conditions such as sintering temperature and sintering time. For example, under the condition that sucrose is used as the source of carbon to prepare the third coating layer, the sucrose is deposited on the second coating layer after pyrolysis, and under the action of high temperature, a carbon coating layer with both SP3 carbon and SP2 carbon is produced. The ratio of SP2 carbon to SP3 carbon can be controlled by selecting the high-temperature pyrolysis and sintering conditions.

The structure and characteristics of the third coating layer carbon can be measured by Raman (Raman) spectroscopy, and the specific measurement method is as follows: splitting the energy spectrum of the Raman test to obtain Id/Ig (where Id is a peak intensity of SP3 carbon and Ig is a peak intensity of SP2 carbon), and then determining the molar ratio therebetween.

In some embodiments, a thickness of the first coating layer ranges from 1 nm to 10 nm; and/or a thickness of the second coating layer ranges from 2 nm to 15 nm; and/or a thickness of the third coating layer ranges from 2 nm to 25 nm.

In some embodiments, the thickness of the first coating layer may be about 2 nm, about 3 nm, about 4 nm, about 5 nm, about 6 nm, about 7 nm, about 8 nm, about 9 nm, or about 10 nm, or in any range defined by any of these values.

In some embodiments, the thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm or about 15 nm, or in any range defined by any of these values.

In some embodiments, the thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, or about 25 nm, or in any range defined by any of these values.

The thickness of the first coating layer being in the range of 1 nm to 10 nm can avoid a possible unfavorable effect, caused by excessive thickness, on the kinetic performance of the material; and it can avoid the problem that the migration of the transition metal ions may not be hindered effectively in a case of an excessively thin coating layer.

The thickness of the second coating layer being in the range of 2 nm to 15 nm allows the second coating layer to have a stable surface structure and fewer side reactions with the electrolyte, thus more effectively mitigating the interfacial side reactions, further improving the high-temperature performance of the secondary battery.

The thickness of the third coating layer being in the range of 2 nm to 25 nm can further improve the electrical conductivity of the material and better increase the compacted density performance of battery electrodes prepared using the positive electrode active material.

The thickness of the coating layer is measured mainly by FIB, and the specific method can include the following steps: randomly selecting a single particle from the positive electrode active material powder under test, cutting a thin slice with a thickness of about 100 nm from the middle or near the middle of the selected particle, and performing TEM test on the thin slice to measure the thickness of the coating layer at 3 to 5 positions and take an average value.

In some embodiments, based on weight of the positive electrode active material, a percentage of element manganese is in the range of 10wt% to 35wt%, optionally in the range of 15wt% to 30wt%, and more optionally in the range of 17wt% to 20wt%, and a percentage of element phosphorus is in the range of 12wt% to 25wt%, and optionally in the range of 15wt% to 20wt%; and a weight ratio of element manganese to element phosphorus is in the range of 0.90 to 1.25, optionally in the range of 0.95 to 1.20.

In this application, under the condition that only the core of the positive electrode active material contains manganese, the manganese content may correspond to the core content.

In the foregoing embodiment, limiting the percentage of the element manganese within the foregoing range can effectively avoid problems such as deterioration of the stability of the material structure and decrease in density that may be caused if the percentage of the element manganese is too large, so as to more effectively improve the performance of the secondary battery in terms of cycle, storage, and compacted density, and so on; and it can avoid problems such as low voltage plateau that may be caused if the percentage of the element manganese is too small, so as to further improve the energy density of the secondary battery.

In the foregoing embodiment, limiting the percentage of the element phosphorus in the foregoing range can effectively avoid the following cases: if the percentage of the element phosphorus is too large, it may lead to the covalency of P-O being too strong and affecting the conductivity of small polarons, thus affecting the electrical conductivity of the material; and if the percentage of phosphorus is too small, it may result in decreased stability of the lattice structure of the pyrophosphate in the first coating layer and/or the phosphate in the second coating layer, thereby affecting the overall stability of the material.

The weight ratio of the contained manganese to phosphorus has the following effects on the performance of the secondary battery: if the weight ratio is too large, it means that the element manganese is too much, and the dissolution of manganese ions increases, affecting the stability and gram capacity utilization of the positive electrode active material, which in turn affects the cycle performance and storage performance of the secondary battery; and if the weight ratio is too small, it means that the element phosphorus is too much, and a heterogeneous phase is prone to be formed, leading to a decrease in the discharge voltage plateau of the material, thereby reducing the energy density of the secondary battery.

The measurement of element manganese and element phosphorus can be performed by means of conventional technologies in the art. In particular, the following method is used to determine the percentage of element manganese and element phosphorus: dissolving the material in dilute hydrochloric acid (with a concentration of 10% to 30%), measuring the percentage of each element in the solution using ICP, and then performing measurement and conversion for the percentage of element manganese to obtain its weight ratio.

In some embodiments, a lattice change rate of the positive electrode active material having a core-shell structure before and after complete deintercalation or intercalation of lithium is below 4%, optionally below 3.8%, and more optionally 2.0% to 3.8%.

The process of deintercalation or intercalation of lithium in lithium manganese phosphate (LiMnPO₄) is a two-phase reaction. The interfacial stress of the two phases is determined by the magnitude of the lattice change rate before and after deintercalation or intercalation of lithium, where a smaller lattice change rate indicates a lower interfacial stress and easier Li⁺ transfer. Therefore, reducing the lattice change rate of the core is beneficial to increase the Li⁺ transport capacity, thereby improving the rate performance of the secondary battery. The positive electrode active material having a core-shell structure of the foregoing embodiment can achieve a lattice change rate below 4% before and after deintercalation or intercalation of lithium, so the use of the positive electrode active material can improve the rate performance of the secondary battery. The lattice change rate can be measured by methods known in the art, for example, X-ray diffraction mapping (XRD).

In some embodiments, a Li/Mn anti-site defect concentration of the positive electrode active material having a core-shell structure is below 4%, optionally below 2.2%, and more optionally from 1.5% to 2.2%.

The Li/Mn anti-site defects of this application mean the interchange of the Li⁺ and Mn²⁺ sites in the LiMnPO₄ lattice. Accordingly, the Li/Mn anti-site defect concentration refers to a percentage of Li⁺ interchanged with Mn²⁺ in the total amount of Li⁺. In this application, the Li/Mn anti-site defect concentration can be tested, for example, according to JIS K 0131-1996.

The positive electrode active material having a core-shell structure of the foregoing embodiment can achieve the foregoing low Li/Mn anti-site defect concentration. Although the mechanism has not been understood yet, the inventors of this application speculate that because the Li⁺ and Mn²⁺ sites in the LiMnPO₄ lattice are interchanged and the transport passage of Li⁺ is a one-dimensional passage, Mn²⁺ is difficult to migrate in the passage of Li⁺ and thus hinders the transport of Li⁺. Therefore, the positive electrode active material having a core-shell structure described in this application can prevent Mn²⁺ from hindering the transport of Li⁺ due to the low Li/Mn anti-site defect concentration, which is in the foregoing range, and increase the gram capacity utilization and rate performance of the positive electrode active material.

In some embodiments, a compacted density under 3T of the positive electrode active material is greater than 2.2 g/cm³, and optionally greater than 2.2 g/cm³ and less than 2.8 g/cm³. A higher compacted density indicates a large weight of the active material per unit volume. Therefore, increasing the compacted density is conducive to increasing the volumetric energy density of the cell. The compacted density can be measured according to GB/T 24533-2009.

In some embodiments, a surface oxygen valence of the positive electrode active material is below -1.90, and optionally from -1.90 to -1.98. The stable valence of oxygen is originally -2. The valence closer to -2 indicates a stronger electron accepting ability, in other words, higher oxidability. Typically, the surface valence of oxygen is below -1.7. In the foregoing embodiment, limiting the surface oxygen valence of the positive electrode active material in the foregoing range can mitigate the interfacial side reactions between the positive electrode material and the electrolyte, thereby improving the performance of the cell in terms of cycling, high temperature storage, and the like and suppressing gas production.

The valence state of surface oxygen can be measured using a method known in the art, such as electron energy loss spectroscopy (EELS).

This application further provides a preparation method of positive electrode active material, including the following steps:
a step of providing a core material, a chemical formula of the core being Li₁₊ₓMn_{1-y}A_{y}P_{1-z}R_{z}O₄, where x is any value in the range of -0.100 to 0.100, y is any value in the range of 0.001 to 0.500, z is any value in the range of 0.001 to 0.100, A is one or more elements selected from Zn, Al, Na, K, Mg, Mo, W, Ti, V, Zr, Fe, Ni, Co, Ga, Sn, Sb, Nb, and Ge, optionally one or more elements from Fe, Ti, V, Ni, Co, and Mg, and R is one or more elements selected from B, Si, N and S, optionally R being one element selected from B, Si, N and S.
a coating step: providing a suspension of LiaMP₂O₇ and/or Mb(P₂O₇)_{c} and a suspension of XPO₄, separately; and adding the core material to the suspensions and mixing them, followed by sintering to obtain a positive electrode active material; where 0≤a≤2, 1≤b≤4, 1≤c≤6, and values of a, b, and c satisfy a condition of keeping the crystalline pyrophosphate LiaMP₂O₇ or Mb(P₂O₇)_{c} electrically neutral; M is each independently one or more elements selected from Fe, Ni, Mg, Co, Cu, Zn, Ti, Ag, Zr, Nb, and Al; and X is one or more elements selected from Li, Fe, Ni, Mg, Co, Cu, Zn, Ti, Ag, Zr, Nb, and Al;
where the positive electrode active material has a core-shell structure including the core and a shell enveloping the core, the shell including the first coating layer enveloping the core, a second coating layer enveloping the first coating layer, and a third coating layer enveloping the second coating layer; where the first coating layer includes a crystalline pyrophosphate LiaMP₂O₇ and/or Mb(P₂O₇)_{c}, the second coating layer includes a crystalline phosphate XPO₄, and the third coating layer is carbon.

In some embodiments, the step of providing a core material includes the following steps:
Step (1): mixing and stirring a manganese source, a dopant of element A, and an acid in a container to obtain manganese salt particles doped with element A;
Step (2): mixing the manganese salt particles doped with element A with a lithium source, a phosphorus source, and a dopant of element R in a solvent to obtain a slurry, and sintering the slurry under protection of an inert gas atmosphere to obtain a core doped with element A and element R, where the core doped with element A and element R is Li₁₊ₓMn_{1-y}A_{y}P_{1-z}R_{z}O₄, where x is any value in the range of -0.100 to 0.100, y is any value in the range of 0.001 to 0.500, z is any value in the range of 0.001 to 0.100, A is one or more elements selected from Zn, Al, Na, K, Mg, Mo, W, Ti, V, Zr, Fe, Ni, Co, Ga, Sn, Sb, Nb, and Ge, optionally one or more elements from Fe, Ti, V, Ni, Co, and Mg, R is one or more elements selected from B, Si, N and S, optionally R being one element selected from B, Si, N and S.

The source of the material is not particularly limited in the preparation method in this application, and the source of an element may include one or more of elementary substance, sulfate, halide, nitrate, organic acid salt, oxide, and hydroxide of the element, provided that the source can achieve the objectives of the preparation method in this application.

In some embodiments, the dopant of element A is one or more selected from the respective elemental form, carbonate, sulfate, chloride, nitrate, organic acid salt, oxide, and hydroxide of one or more of elements Zn, Al, Na, K, Mg, Mo, W, Ti, V, Zr, Fe, Ni, Co, Ga, Sn, Sb, Nb, and Ge.

In some embodiments, the dopant of element R is one or more selected from the respective inorganic acid, sub-acid, organic acid, sulfate, chloride, nitrate, organic acid salt, oxide, and hydroxide of one or more of elements B, Si, N, and S.

In this application, the manganese source may be a manganese-containing substance known in the art that can be used to prepare lithium manganese phosphate. For example, the manganese source may be one or more selected from elemental manganese, manganese dioxide, manganese phosphate, manganese oxalate, and manganese carbonate.

In this application, the acid may be selected from one or more of organic acids such as hydrochloric acid, sulfuric acid, nitric acid, phosphoric acid, silicic acid, and metasilicic acid, and organic acids such as oxalic acid. In some embodiments, the acid is a dilute organic acid with a concentration below 60wt%.

In this application, the lithium source may be a lithium-containing substance known in the art that can be used to prepare lithium manganese phosphate. For example, the lithium source is selected from one or more of lithium carbonate, lithium hydroxide, lithium phosphate, and lithium dihydrogen phosphate.

In this application, the phosphorus source may be a phosphorus-containing substance known in the art that can be used to prepare lithium manganese phosphate. For example, the phosphorus source is one or more selected from diammonium phosphate, ammonium dihydrogen phosphate, ammonium phosphate, and phosphoric acid.

In some optional embodiments, after the manganese source, the dopant of element A, and the acid are reacted in a solvent to obtain a suspension of manganese salt doped with element A, the suspension is filtered, dried, and sanded to obtain element A-doped manganese salt particles having a particle size of 50 nm to 200 nm.

In some optional embodiments, the slurry in step (2) is dried to obtain a powder, and then the powder is sintered to obtain a core doped with element A and element R.

In some embodiments, mixing in step (1) is performed at a temperature of 20°C to 120°C, and optionally 40°C to 120°C; and/or
stirring in the step (1) is performed at 400-700 rpm for 1-9 hours, and optionally 3-7 hours.

Optionally, the reaction temperature in step (1) may be about 30°C, about 50°C, about 60°C, about 70°C, about 80°C, about 90°C, about 100°C, about 110°C or about 120°C; the stirring in step (1) may be performed for about 2 hours, about 3 hours, about 4 hours, about 5 hours, about 6 hours, about 7 hours, about 8 hours, or about 9 hours; and optionally, the reaction temperature and the stirring time in step (1) may be within any range of any of the above values.

In some embodiments, mixing in step (2) is performed at a temperature of 20°C to 120°C, and optionally 40°C to 120°C for about 1 hour to 12 hours. Optionally, the reaction temperature in step (2) may be about 30°C, about 50°C, about 60°C, about 70°C, about 80°C, about 90°C, about 100°C, about 110°C or about 120°C; the mixing in step (2) may be performed for about 2 hours, about 3 hours, about 4 hours, about 5 hours, about 6 hours, about 7 hours, about 8 hours, 9 hours, 10 hours, 11 hours, or about 12 hours; and optionally, the reaction temperature and the mixing time in step (2) may be within any range of any of the above values.

With the temperature and time for the preparation of the core particles in the foregoing ranges, the core obtained from the preparation and the positive electrode active material made therefrom have fewer lattice defects, which is conducive to suppressing manganese ion dissolution and reducing interfacial side reactions between the positive electrode active material and the electrolyte, thereby improving the cycling performance and safety performance of the secondary battery.

In some embodiments, optionally, in the process of preparing the dilute acid manganese particles doped with element A and element R, the pH of the solution is controlled in the range of 3.5 to 6; optionally, the PH of the solution is controlled in the range of 4 to 6; and more optionally, the PH of the solution is controlled in the range of 4 to 5. It should be noted that the pH of the obtained mixture may be adjusted in this application by a method commonly used in the art, for example, the addition of an acid or alkali.

In some embodiments, optionally, a molar ratio of the manganese salt particles to the lithium source and the phosphorus source in step (2) is 1:0.5-2.1:0.5-2.1, and more optionally, a molar ratio of the manganese salt particles doped with element A to the lithium source and phosphorus source is about 1:1:1.

In some embodiments, optionally, the sintering conditions in the process of preparing lithium manganese phosphate doped with element A and element R are as follows: the sintering is performed under an inert gas or a mixture of inert gas and hydrogen at 600°C to 950°C for 4-10 hours; optionally, the sintering may be performed at about 650°C, about 700°C, about 750°C, about 800°C, about 850°C, or about 900°C for about 2 hours, about 3 hours, about 4 hours, about 5 hours, about 6 hours, about 7 hours, about 8 hours, about 9 hours, or about 10 hours; and optionally, the sintering temperature and sintering time may be in any range defined by any of these values. In the process of preparing lithium manganese phosphate doped with element A and element R, if the sintering temperature is too low and the sintering time is too short, the crystallinity of the core of the material will be low, affecting the overall performance; and if the sintering temperature is too high, heterogeneous phases are prone to appear in the core of the material, affecting the overall performance; and if the sintering time is too long, the particles of the core of the material will grow large, affecting the gram capacity, the compacted density, the rate performance, and so on.

In some optional embodiments, optionally, the protective atmosphere is a mixture of 70vol% to 90vol% nitrogen and 10vol% to 30vol% hydrogen.

In some embodiments, the coating step includes:
a first coating step: dissolving a source of element M, a phosphorus source, an acid, and an arbitrary lithium source in a solvent to obtain a first coating layer suspension; and thoroughly mixing the core obtained in the core preparation step with the first coating layer suspension obtained in the first coating step, followed by drying and sintering, to obtain the material enveloped with the first coating layer;
a second coating step: dissolving a source of element X, a phosphorus source, and an acid in a solvent to obtain a second coating layer suspension; and thoroughly mixing the material enveloped with the first coating layer obtained in the first coating step with the second coating layer suspension obtained in the second coating step, followed by drying and sintering, to obtain the material enveloped with two coating layers; and
a third coating step: dissolving fully a carbon source in a solvent to obtain a third coating layer solution; and adding the material enveloped with two coating layers obtained in the second coating step to the third coating layer solution, followed by mixing well, drying, and sintering, to obtain the material enveloped with three coating layers, that is, the positive electrode active material.

In some embodiments, the source of the element M is one or more selected from the respective elemental form, carbonate, sulfate, chloride, nitrate, organic acid salt, oxide, and hydroxide of one or more of elements Fe, Ni, Mg, Co, Cu, Zn, Ti, Ag, Zr, Nb, or Al.

In some embodiments, the source of the element X is one or more selected from the respective elemental form, carbonate, sulfate, chloride, nitrate, organic acid salt, oxide, and hydroxide of one or more of elements Li, Fe, Ni, Mg, Co, Cu, Zn, Ti, Ag, Zr, Nb or Al.

The amounts of sources of the elements A, R, M, X added each depend on a target doping amount, and the ratio of amounts of the lithium source, the manganese source, and the phosphorus source conforms to the stoichiometric ratio.

In this application, as an example, the carbon source is one or more selected from starch, sucrose, glucose, polyvinyl alcohol, polyethylene glycol, and citric acid.

In some embodiments, in the first coating step, while the pH of the solution dissolved with a source of element M, a phosphorus source, an acid, and an arbitrary lithium source is controlled to be in the range of 3.5 to 6.5, the solution is stirred and reacted for 1 h to 5 h, heated to a temperature of 50°C to 120°C, kept at that temperature for 2-10 hours, and/or, sintered at 650°C to 800°C for 2-6 hours.

Optionally, in the first coating step, the reaction is fully carried out. Optionally, in the first coating step, the reaction is carried out for about 1.5 hours, about 2 hours, about 3 hours, about 4 hours, about 4.5 hours, or about 5 hours. Optionally, in the first coating step, the reaction time of the reaction may be in any range defined by any of these values.

Optionally, in the first coating step, the pH of the solution is controlled in the range of 4 to 6. Optionally, in the first coating step, the solution is heated to about 55°C, about 60°C, about 70°C, about 80°C, about 90°C, about 100°C, about 110°C or about 120°C, and kept at that temperature for about 2 hours, about 3 hours, about 4 hours, about 5 hours, about 6 hours, about 7 hours, about 8 hours, about 9 hours, or about 10 hours; optionally, in the first coating step, the heated-to temperature and the keeping time may be in any range defined by any of these values.

Optionally, in the first coating step, the sintering may be carried at about 650°C, about 700°C, about 750°C, or about 800°C for about 2 hours, about 3 hours, about 4 hours, about 5 hours, or about 6 hours; optionally, the sintering temperature and sintering time may be in any range defined by any of these values.

In the first coating step, controlling the sintering temperature and time to be within the foregoing ranges can avoid the following cases: in the first coating step, when the sintering temperature is too low and the sintering time is too short, it will result in low crystallinity and a higher proportion of amorphous substances in the first coating layer. This can result in a decrease in the effectiveness of suppressing metal dissolution, thereby affecting the cycle performance and high-temperature storage performance of the secondary battery; however, when the sintering temperature is too high, a heterogeneous phase will appear in the first coating layer, which also affects its effectiveness in suppressing metal dissolution, thereby affecting the cycle and high-temperature storage performance and the like of the secondary battery; and when the sintering time is too long, the thickness of the first coating layer is increased, affecting the migration of Li+, thereby affecting the gram capacity utilization, rate performance, and the like of the material.

In some embodiments, in the second coating step, a source of element M, a phosphorus source, and an acid are dissolved in the solution, the solution is stirred and reacted for 1 hour to 10 hours, heated to a temperature of 60°C to 120°C, kept at that temperature for 2-10 hours, and/or, sintered at 500°C to 700°C for 6-10 hours.

Optionally, in the second coating step, the reaction is fully carried out. Optionally, in the second coating step, the reaction is carried out for about 1.5 hours, about 2 hours, about 3 hours, about 4 hours, about 4.5 hours, about 5 hours, about 6 hours, about 7 hours, about 8 hours, about 9 hours, or about 10 hours. Optionally, in the second coating step, the reaction time of the reaction may be in any range defined by any of these values.

Optionally, in the second coating step, the solution is heated to about 65°C, about 70°C, about 80°C, about 90°C, about 100°C, about 110°C, about 120°C, about 130°C, about 140°C, or about 150°C, and kept at that temperature for about 2 hours, about 3 hours, about 4 hours, about 5 hours, about 6 hours, about 7 hours, about 8 hours, about 9 hours, or about 10 hours; optionally, in the second coating step, the heated-to temperature and the keeping time may be in any range defined by any of these values.

In the step of providing a core material, the first coating step, and the second coating step, prior to sintering, that is, during the preparation of the core material in which chemical reactions take place (step (1) and step (2)) and during the preparation of the first coating layer suspension and the second coating layer suspension, selecting appropriate reaction temperatures and reaction times as described above can avoid the following cases: when the reaction temperature is too low, the reaction cannot occur or the reaction rate is slow; when the temperature is too high, the product decomposes or a heterogeneous phase is formed; when the reaction time is too long, the product particle size is large, which may increase the time and difficulty of subsequent processes; and when the reaction time is too short, the reaction is incomplete and less product is obtained.

Optionally, in the second coating step, the sintering may be carried out at about 550°C, about 600°C, or about 700°C for about 6 hours, about 7 hours, about 8 hours, about 9 hours, or about 10 hours; optionally, the sintering temperature and sintering time may be in any range defined by any of these values.

In the second coating step, controlling the sintering temperature and time to be within the foregoing ranges can avoid the following cases: In the second coating step, when the sintering temperature is too low and the sintering time is too short, it will result in low crystallinity and a higher proportion of amorphous phase in the second coating layer. This can result in a decrease in the performance of reducing reaction activity on the material surface, thereby affecting the cycle performance, high-temperature storage performance, and the like of the secondary battery; however, when the sintering temperature is too high, a heterogeneous phase will appear in the second coating layer, which also affects its effectiveness in reducing reaction activity on the material surface, thereby affecting the cycle and high-temperature storage performance and the like of the secondary battery; and when the sintering time is too long, the thickness of the second coating layer is increased, affecting the voltage plateau of the material, thereby resulting in reducing in the energy density of the material and the like.

In some embodiments, in the third coating step, the sintering is carried out at 700°C to 800°C for 6-10 hours. Optionally, in the third coating step, the sintering may be carried out at about 700°C, about 750°C, or about 800°C for about 6 hours, about 7 hours, about 8 hours, about 9 hours, or about 10 hours; optionally, the sintering temperature and sintering time may be in any ranges defined by any of these values.

In the third coating step, controlling the sintering temperature and time to be within the foregoing ranges can avoid the following cases: In the third coating step, when the sintering temperature is too low, it will lead to a decrease in the graphitization degree of the third coating layer, affecting its electrical conductivity and thus affecting the gram capacity utilization of the material; when the sintering temperature is too high, it will lead to an excessive degree of graphitization of the third coating layer, affecting the Li⁺ transport, thereby affecting the gram capacity utilization and the like of the material; when the sintering time is too short, it will result in an excessively thin coating layer, affecting its electrical conductivity and thereby affecting the gram capacity utilization of the material; and when the sintering time is too long, it will result in an excessively thick coating layer, thereby affecting the compacted density and the like of the material.

In the first coating step, the second coating step, and the third coating step described above, the drying is all carried out at 100°C to 200°C, optionally at 110°C to 190°C, more optionally at 120°C to 180°C, further more optionally 120°C to 170°C, or most optionally 120°C to 160°C, with a drying time of 3-9 hours, optionally 4-8 hours, more optionally 5-7 hours, and most optionally about 6 hours.

With the positive electrode active material prepared by using the method for preparing the positive electrode active material described in this application, the secondary battery prepared therefrom exhibits a lower dissolving-out amount of Mn and elements doped at Mn site after cycling, as well as improved high-temperature stability, high-temperature cycle performance, and rate capability. In addition, the raw materials are widely available and are of low cost, and the process is simple, which is conducive to industrial-scale implementation.

In some embodiments, the positive electrode active material may be another well-known positive electrode active material used for batteries in the art. In an example, the other positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO4), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative-electrode film layer further optionally includes a conductive agent. For example, the conductive agent may be selected from at least one of superconducting carbon, acetylene black, carbon black, Ketjen black, carbon dots, carbon nanotubes, graphene, or carbon nanofibers.

In some embodiments, the negative electrode film layer may further optionally include other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

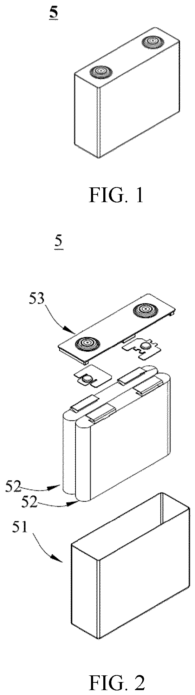

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

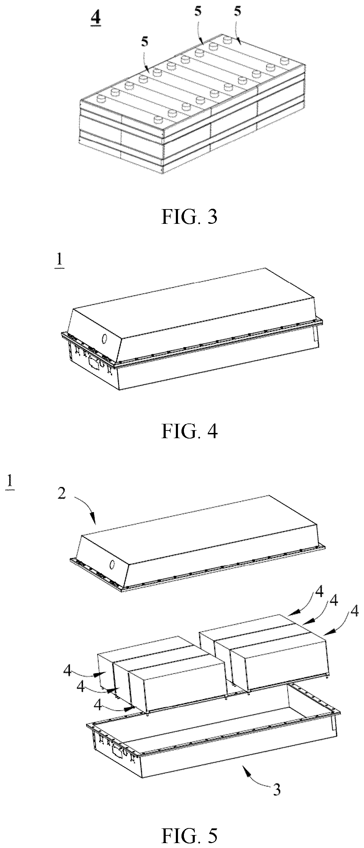

FIG. 3 shows a battery module 4 as an example. Referring to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

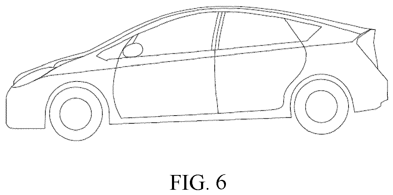

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

The first solvent is selected from the following solvents:

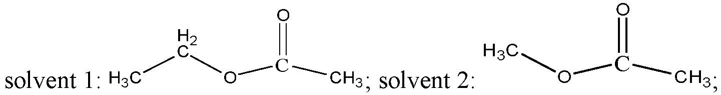

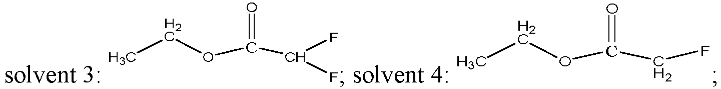

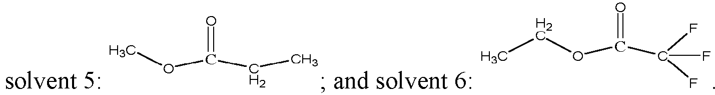

The first additive is selected from the following compounds:

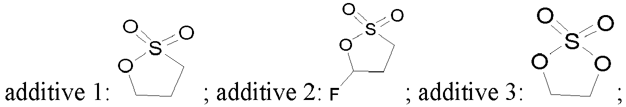

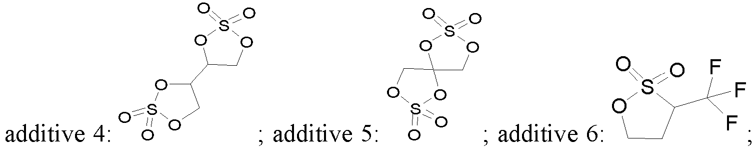

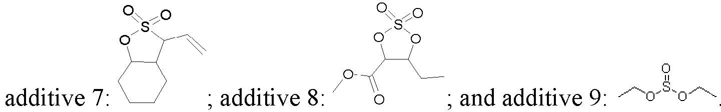

### I. Preparation of battery

### Example 1:

### Step 1: Preparation of positive electrode active material

### Step S1: Preparation of Fe, Co, V, and S co-doped manganese oxalate

689.6 g of manganese carbonate, 455.27 g of ferrous carbonate, 4.65 g of cobalt sulfate, and 4.87 g of vanadium dichloride were added into a mixer and mixed thoroughly for 6 h. The resulting mixture was transferred into a reactor, 5 L of deionized water and 1260.6 g of oxalic acid dihydrate were added into the reactor, the reactor was heated to 80°C, and the materials were mixed well for 6 h at 500 rpm until the reaction was terminated without bubbles to obtain a Fe, Co, and V co-doped manganese oxalate suspension. The suspension was filtered, dried at 120°C, and then sanded to obtain manganese oxalate particles with a particle size of 100 nm.

### Step S2: Preparation of core Li_{0.997}Mn_{0.60}Fe_{0.393}V_{0.004}C_{00.003}P_{0.997}S_{0.003}O₄

1793.1 g of manganese oxalate prepared in (1), 368.3 g of lithium carbonate, 1146.6 g of ammonium dihydrogen phosphate, and 4.9 g of dilute sulfuric acid were added into 20 L of deionized water, the mixture was stirred thoroughly, evenly mixed and reacted at 80°C for 10h to get a slurry. The slurry was transferred to a spray drying equipment for spray drying and granulation at 250°C to obtain a powder material. The powder was sintered in a roller kiln for 4 h at 700°C in a protective atmosphere (90% nitrogen and 10% hydrogen) to obtain the core material.

### Step S3: Preparation of first coating layer suspension

Preparation of Li₂FeP₂O₇ solution: 7.4 g of lithium carbonate, 11.6 g of ferrous carbonate, 23.0 g of ammonium dihydrogen phosphate, and 12.6 g of oxalic acid dihydrate were dissolved in 500 mL of deionized water, during which a pH value was controlled to be 5; the mixture was stirred and reacted at room temperature for 2h to obtain a solution; and then the solution was heated to 80°C and kept at this temperature for 4 h to obtain a first coating layer suspension.

### Step S4: Application of first coating layer

1571.9 g of doped lithium manganese phosphate core material obtained in step S2 was added to the first coating layer suspension (containing 15.7 g of coating substance) obtained in step S3, and the mixture was fully mixed and stirred for 6 h. After well mixing, the mixture was transferred to an oven for drying at 120°C for 6 h, and then sintered at 650°C for 6 h to obtain a pyrophosphate-coated material.

### Step S5: Preparation of second coating layer suspension

3.7 g of lithium carbonate, 11.6 g of ferrous carbonate, 11.5 g of ammonium dihydrogen phosphate, and 12.6 g of oxalic acid dihydrate were dissolved in 1500 mL of deionized water; the mixture was stirred and reacted for 6 h to obtain a solution; and then the solution was heated to 120°C and kept at this temperature for 6 h to obtain a second coating layer suspension.

### Step S6: Application of second coating layer

1586.8 g of the pyrophosphate-coated material obtained in step S4 was added to the second coating layer suspension (having a coating substance of 47.1 g) obtained in step S5, and the mixture was fully mixed and stirred for 6 h. After well mixing, the mixture was transferred to an oven for drying at 120°C for 6 h, and then sintered at 700°C for 8 h to obtain a material with two coating layers.

### Step S7: Preparation of third coating layer aqueous solution

37.3 g of sucrose was dissolved in 500 g of deionized water, and then the mixture was stirred and fully dissolved to obtain an aqueous solution of sucrose.

### Step S8: Application of third coating layer

1633.9 g of the material with two coating layers obtained in step S6 was added into the sucrose solution obtained in step S7. The mixture was stirred and mixed for 6 h. After well mixing, the mixture was transferred to an oven and dried there at 150°C for 6 h, and then sintered at 700°C for 10 h to obtain a material with three coating layers.

### Step 2: Preparation of positive electrode plate

The prepared positive electrode active material with three coating layers, a conductive agent acetylene black, and a binder polyvinylidene fluoride (PVDF) were added at a weight ratio of 97.0:1.2:1.8 to N-methylpyrrolidone (NMP), stirred and mixed to uniformity to obtain a positive electrode slurry. The positive electrode slurry was applied onto an aluminum foil at 0.280 g/1540.25 mm², followed by drying and cold pressing, to obtain a positive electrode plate.

### Step 3: Preparation of negative electrode plate

A negative electrode active substance artificial graphite, hard carbon, a conductive agent acetylene black, a binder styrene-butadiene rubber (SBR), a thickener sodium carboxymethyl cellulose (CMC) were dissolved at a weight ratio of 90:5:2:2:1 in a solvent deionized water, stirred and mixed evenly to obtain negative electrode slurry. The negative electrode slurry was applied onto a negative electrode current collector copper foil at 0.117 g/1540.25 mm², followed by drying, cold pressing, and slitting, to obtain a negative electrode plate.

### Step 4: Preparation of electrolyte

In an argon atmosphere glove box (H₂O < 0.1 ppm, O₂ < 0.1 ppm), solvent 1 was used as the first solvent, a mixed liquid formed by mixing ethylene carbonate (EC) and ethyl methyl carbonate (EMC) at a volume ratio of 3/7 was used as the second solvent, additive 1 was used as the first additive, and LiPF₆ was used as the lithium salt, where the first solvent, the second solvent, the first additive, and the lithium salt formed the electrolyte. The mass ratio of the first solvent and the second solvent was 1: 1. In the total mass of the electrolyte, the mass percentage of the first additive was 3% and the mass percentage of the lithium salt was 12.5%.

### Step 5: Preparation of separator

A commercially available PP-PE copolymer microporous film (from Advanced Electronic Technology Co., Ltd. model 20) with a thickness of 20 µm and an average pore size of 80 nm was used.

### Step 6: Preparation of full cell

The positive electrode plate, separator, and negative electrode plate obtained above were stacked in order, so that the separator was placed between the positive and negative electrodes for separation, and winding was performed to obtain a jelly roll. The jelly roll was placed in an outer package, the electrolyte was injected, and the outer package was sealed to obtain a full cell (also referred to as "full cell" hereinafter).

### [Preparation of button battery]

The prepared positive electrode active material, polyvinylidene fluoride (PVDF), and acetylene black were added at a weight ratio of 90:5:5 to N-methylpyrrolidone (NMP), and stirred in a drying room to obtain a slurry. The slurry was applied onto an aluminum foil, followed by drying and cold pressing, to obtain a positive electrode plate. The application amount was 0.2 g/cm² and the compacted density was 2.0 g/cm³.

A lithium sheet was used as the negative electrode, solvent 1 was used as the first solvent, and a mixed solution formed by ethylene carbonate (EC), diethyl carbonate (DEC) and dimethyl carbonate (DMC) at a volume ratio of 1: 1: 1 was used as the second solvent, additive 1 was used as the first additive, and LiPF₆ was used as the lithium salt, where the first solvent, the second solvent, the first additive, and the lithium salt formed the electrolyte. The mass ratio of the first solvent and the second solvent was 1: 1. In the total mass of the electrolyte, the mass percentage of the first additive was 3% and the mass percentage of the lithium salt was 1 mol/L. These, together with the positive electrode plate prepared above, were assembled into a button battery (hereinafter also referred to as "button battery") in a button battery box.

### Examples 2 to 27 and Comparative Examples 1 to 19

The positive electrode active materials and batteries in Examples 2 to 27 and Comparative Examples 1 to 19 were prepared in a manner similar to that for Example 1. Tables 1 to 6 gives differences in the preparation of the positive electrode active materials, where the positive electrode active materials in Comparative Examples 1, 2, 4 to 10, and 12 were not coated by the first layer, so there were no steps S3 and S4; and the positive electrode active materials in Comparative Examples 1 to 11 were not coated by the second layer, so there were no steps S5 and S6.

Note: In all examples and comparative examples of this application, if not specified, the first coating layer substance and/or the second coating layer substance used are by default crystalline.

**Table 1: Materials for preparation of the core**

| No. | Core | Raw materials used in step S1 | Raw materials used in step S2 |
|---|---|---|---|
| Comparative Example 1 and Comparative Example 13 | LiMnPO₄ | Manganese carbonate, 1149.3 g; water, 5 L; oxalic acid dihydrate, 1260.6 g; | Manganese oxalate dihydrate (in terms of C₂O₄Mn•2H₂O) obtained in step S1, 1789.6 g; lithium carbonate, 369.4 g; ammonium dihydrogen phosphate, 1150.1 g; water, 20 L |
| Comparative Example 2 | LiMn_{0.60}Fe_{0.40}PO₄ | Manganese carbonate, 689.6 g; ferrous carbonate, 463.4 g; water, 5 L; oxalic acid dihydrate, 1260.6 g; | Ferromanganese oxalate dihydrate (in terms of C₂O₄Mn_{0.60}Fe_{0.40}•2H₂O) obtained in step S1, 1793.2 g; lithium carbonate, 369.4 g; ammonium dihydrogen phosphate 1150.1 g; water, 20 L |
| Comparative Example 3 | LiMn_{0.80}Fe_{0.20}PO₄ | Manganese carbonate, 919.4g; ferrous carbonate, 231.7g; water, 5 L; oxalic acid dihydrate, 1260.6 g; | Ferromanganese oxalate dihydrate (in terms of C₂O₄Mn_{0.80}Fe_{0.20}•2H₂O) obtained in step S1, 1791.4g; lithium carbonate, 369.4 g; ammonium dihydrogen phosphate 1150.1 g; water, 20 L |
| Comparative Example 4 | LiMn_{0.70}Fe_{0.295}V_{0.005}PO₄ | Manganese carbonate, 804.5 g; ferrous carbonate, 341.8 g; vanadium dichloride, 6.1 g; water, 5 L; oxalic acid dihydrate, 1260.6 g; | Ferromanganese vanadium oxalate dihydrate (in terms of C₂O₄Mn_{0.70}Fe_{0.295}V_{0.005}•2H₂O) obtained in step S1, 1792.0 g; lithium carbonate, 369.4 g; ammonium dihydrogen phosphate, 1150.1 g; water, 20 L |
| Comparative Example 5 and Comparative Example 15 | LiMn_{0.60}Fe_{0.395}Mg_{0.005}PO₄ | Manganese carbonate, 689.6 g; ferrous carbonate, 457.6 g; magnesium carbonate, 4.2 g; water, 5 L; oxalic acid dihydrate, 1260.6 g; | Ferromanganese magnesium oxalate dihydrate (in terms of C₂O₄Mn_{0.60}Fe_{0.395}Mg_{0.005}•2H₂O) obtained in step S1, 1791.6 g; lithium carbonate, 369.4 g; ammonium dihydrogen phosphate, 1150.1 g; water, 20 L |
| Comparative Example 6 | LiMn_{0.60}Fe_{0.35}Ni_{0.05}PO₄ | Manganese carbonate, 689.6 g; ferrous carbonate, 405.4 g; nickel carbonate, 59.3 g; water, 5 L; oxalic acid dihydrate, 1260.6 g; | Ferromanganese nickel oxalate dihydrate (in terms of C₂O₄Mn_{0.60}Fe_{0.35}Ni_{0.05}•2H₂O) obtained in step S1, 1794.6 g; lithium carbonate, 369.4 g; ammonium dihydrogen phosphate, 1150.1 g; water, 20 L |
| Comparative Example 7 and Comparative Example 9 | LiMn_{0.60}Fe_{0.395}V_{0.002}Ni_{0.003}PO₄ | Manganese carbonate, 689.6 g; ferrous carbonate, 457.6 g; vanadium dichloride, 2.4 g; nickel carbonate, 3.6 g; water, 5 L; oxalic acid dihydrate, 1260.6 g; | Ferromanganese vanadium nickel oxalate dihydrate (in terms of C₂O₄Mn_{0.60}Fe_{0.395}V_{0.002}Ni_{0.003}•2H₂O) obtained in step S1, 1793.2 g; lithium carbonate, 369.4 g; ammonium dihydrogen phosphate, 1150.1 g; water, 20 L |
| Comparative Example 8 | LiMn_{0.60}Fe_{0.395}V_{0.002}Mg_{0.003}PO₄ | Manganese carbonate, 689.6 g; ferrous carbonate, 457.6 g; vanadium dichloride, 2.4 g; magnesium carbonate, 2.53 g; water, 5 L; oxalic acid dihydrate, 1260.6 g; | Ferromanganese vanadium manganese oxalate dihydrate (in terms of C₂O₄Mn_{0.60}Fe_{0.395}V_{0.002}Mg_{0.003}•2H₂O) obtained in step S1, 1792.1 g; lithium carbonate, 369.4 g; ammonium dihydrogen phosphate, 1150.1 g; water, 20 L |
| Comparative Examples 10 to 12, Comparative Examples 16 and 17, and Examples 1 to 10 | Li_{0.997}Mn_{0.60}Fe_{0.393}V_{0.004}Co_{0.003}P_{0.997}S_{0.003}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Ferromanganese vanadium cobalt oxalate dihydrate (in terms of C₂O₄Mn_{0.60}Fe_{0.393}V_{0.004}Co_{0.003}•2H₂O) obtained in step S1, 1793.1 g; lithium carbonate, 368.3 g; ammonium dihydrogen phosphate, 1146.6 g; dilute sulfuric acid, 4.9 g; water, 20 L |
| Comparative Example 14 | Li_{1.2}MnP_{0.8}Si_{0.2}O₄ | Manganese carbonate, 1149.3 g; water, 5 L; oxalic acid dihydrate, 1260.6 g; | Manganese oxalate dihydrate (in terms of C₂O₄Mn•2H₂O) obtained in step S1, 1789.6 g; lithium carbonate, 443.3 g; ammonium dihydrogen phosphate, 920.1 g; silicate, 156.2 g; water, 20 L |
| Example 11 | Li_{1.001}Mn_{0.60}Fe_{0.393}V_{0.004}Co_{0.003}P_{0.999}Si_{0.001}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Ferromanganese vanadium cobalt oxalate dihydrate (in terms of C₂O₄Mn_{0.60}Fe_{0.393}V_{0.004}Co_{0.003}•2H₂O) obtained in step S1, 1793.1 g; lithium carbonate, 369.8 g; ammonium dihydrogen phosphate, 1148.9 g; silicate, 0.8 g; water, 20 L |
| Example 12 | LiMn_{0.60}Fe_{0.393}V_{0.004}CO_{0.003}P_{0.998}N_{0.002}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Ferromanganese vanadium cobalt oxalate dihydrate (in terms of C₂O₄Mn_{0.60}Fe_{0.393}V_{0.004}Co_{0.003}•2H₂O) obtained in step S1, 1793.1 g; lithium carbonate, 369.4 g; ammonium dihydrogen phosphate, 1147.8 g; dilute nitric acid, 2.7 g; water, 20 L |
| Example 13 | Li_{0.995}Mn_{0.65}Fe_{0.341}V_{0.004}Co_{0.005}P_{0.995}S_{0.005}O₄ | Manganese carbonate, 747.1g; ferrous carbonate, 395.1g; cobalt sulfate, 7.8g; vanadium dichloride, 4.9 g; water, 5 L; oxalic acid dihydrate, 1260.6 g; | Ferromanganese vanadium cobalt oxalate dihydrate (in terms of C₂O₄Mn_{0.65}Fe_{0.341}V_{0.004}Co_{0.005}•2H₂O) obtained in step S1, 1792.7g; lithium carbonate, 367.6g; ammonium dihydrogen phosphate, 1144.3g; dilute sulfuric acid, 8.2g; water, 20 L |
| Example 14 | Li_{1.002}Mn_{0.70}Fe_{0.293}V_{0.004}Co_{0.003}P_{0.998}Si_{0.002}O₄ | Manganese carbonate, 804.6g; ferrous carbonate, 339.5g; cobalt sulfate, 4.7g; vanadium dichloride, 4.9 g; water, 5 L; oxalic acid dihydrate, 1260.6 g; | Ferromanganese vanadium cobalt oxalate dihydrate (in terms of C₂O₄Mn_{0.70}Fe_{0.293}V_{0.004}Co_{0.003}•2H₂O) obtained in step S1, 1792.2 g; lithium carbonate, 370.2 g; 1147.8; silicate, 1.6 g; water, 20 L |
| Examples 15 and 17 | LiMn_{0.60}Fe_{0.393}V_{0.004}Co_{0.003}P_{0.999}N_{0.001}O₄ | Manganese carbonate, 689.6g; ferrous carbonate, 455.3g; cobalt sulfate, 4.7g; vanadium dichloride, 4.9 g; water, 5 L; oxalic acid dihydrate, 1260.6 g; | Ferromanganese vanadium cobalt oxalate dihydrate (in terms of C₂O₄Mn_{0.60}Fe_{0.393}V_{0.004}Co_{0.003}•2H₂O) obtained in step S1, 1793.1 g; lithium carbonate, 369.4 g; ammonium dihydrogen phosphate, 1148.9g; dilute nitric acid, 1.4g; water, 20 L |
| Example 16 | Li_{0.997}Mn_{0.60}Fe_{0.393}V_{0.004}Co_{0.003}P_{0.997}S_{0.003}O₄ | Manganese carbonate, 689.6g; ferrous carbonate, 455.3g; cobalt sulfate, 4.7g; vanadium dichloride, 4.9 g; water, 5 L; oxalic acid dihydrate, 1260.6 g; | Ferromanganese vanadium cobalt oxalate dihydrate (in terms of C₂O₄Mn_{0.60}Fe_{0.393}V_{0.004}Co_{0.003}•2H₂O) obtained in step S1, 1793.1g; lithium carbonate, 368.7g; ammonium dihydrogen phosphate, 1146.6g; dilute sulfuric acid, 4.9g; water, 20 L |
| Example 18 | LiMn_{0.60}Fe_{0.393}V_{0.004}Mg_{0.003}P_{0.995}N_{0.005}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Ferromanganese vanadium magnesium oxalate dihydrate (in terms of C₂O₄Mn_{0.60}Fe_{0.393}V_{0.004}Mg_{0.003}•2H₂O) obtained in step S1, 1791.1 g; lithium carbonate, 369.4 g; ammonium dihydrogen phosphate, 1144.3 g; dilute nitric acid, 7.0 g; water, 20 L; |
| Example 19 | Li_{0.999}Mn_{0.60}Fe_{0.393}V_{0.004}Mg_{0.003}P_{0.999}S_{0.001}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Ferromanganese vanadium magnesium oxalate dihydrate (in terms of C₂O₄Mn_{0.60}Fe_{0.393}V_{0.004}Mg_{0.003}•2H₂O) obtained in step S1, 1791.1 g; lithium carbonate, 369.0g; ammonium dihydrogen phosphate, 1148.9 g; dilute sulfuric acid, 1.6 g; water, 20 L |
| Example 20 | Li_{0.998}Mn_{0.60}Fe_{0.393}V_{0.004}Ni_{0.003}P_{0.998}S_{0.002}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Ferromanganese vanadium nickel oxalate dihydrate (in terms of C₂O₄Mn_{0.60}Fe_{0.393}V_{0.004}Ni_{0.003}•2H₂O) obtained in step S1, 1792.2 g; lithium carbonate, 368.7 g; ammonium dihydrogen phosphate, 1147.8 g; dilute sulfuric acid, 3.2 g; water, 20 L; |
| Examples 21 to 24 | Li_{1.001}Mn_{0.60}Fe_{0.393}V_{0.004}Ni_{0.003}P_{0.999}Si_{0.001}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Ferromanganese vanadium nickel oxalate dihydrate (in terms of C₂O₄Mn_{0.60}Fe_{0.393}V_{0.004}Ni_{0.003}•2H₂O) obtained in step S1, 1793.1 g; lithium carbonate, 369.8 g; ammonium dihydrogen phosphate, 1148.9 g; silicate, 0.8 g; water, 20 L; |
| Example 25 | Li_{1.001}Mn_{0.50}Fe_{0.493}V_{0.004}Ni_{0.003}P_{0.999}Si_{0.001}O₄ | Manganese carbonate, 574.7g; ferrous carbonate, 571.2g; nickel carbonate, 3.6 g; vanadium dichloride, 4.9 g; water, 5 L; oxalic acid dihydrate, 1260.6 g; | Ferromanganese vanadium nickel oxalate dihydrate (in terms of C₂O₄Mn_{0.50}Fe_{0.493}V_{0.004}Ni_{0.003}•2H₂O) obtained in step S1, 1794.0g; lithium carbonate, 369.8 g; ammonium dihydrogen phosphate, 1148.9 g; silicate, 0.8 g; water, 20 L; |
| Example 26 | Li_{1.001}Mn_{0.999}Fe_{0.001}P_{0.999}Si_{0.001}O₄ | Manganese carbonate, 1148.2g; ferrous carbonate, 1.2g; water, 5 L; oxalic acid dihydrate, 1260.6 g; | Ferromanganese oxalate dihydrate (in terms of C₂O₄Mn_{0.999}Fe_{0.001}•2H₂O) obtained in step S1, 1789.6 g; lithium carbonate, 369.8 g; ammonium dihydrogen phosphate 1148.9 g; silicate, 0.8 g; water, 20 L; |
| Example 27 | LiMn_{0.60}Fe_{0.393}V_{0.004}Ni_{0.003}P_{0.9}N_{0.100}O₄ | Manganese carbonate, 689.6g; ferrous carbonate, 455.3g; nickel carbonate, 3.6 g; vanadium dichloride, 4.9 g; water, 5 L; oxalic acid dihydrate, 1260.6 g; | Ferromanganese vanadium nickel oxalate dihydrate (in terms of C₂O₄Mn_{0.60}Fe_{0.393}V_{0.004}Ni_{0.003}•2H₂O) obtained in step S1, 1793.1 g; lithium carbonate, 369.4 g; ammonium dihydrogen phosphate, 1035.1 g; dilute nitric acid, 140.0 g; water, 20 L; |
| Example 28 | Li_{1.001}Mn_{0.40}Fe_{0.593}V_{0.004}Ni_{0.003}P_{0.999}Si_{0.001}O₄ | Manganese carbonate, 459.7g; ferrous carbonate, 686.9 g; vanadium dichloride, 4.8g; nickel carbonate, 3.6 g; water, 5 L; oxalic acid dihydrate, 1260.6 g; | Ferromanganese vanadium nickel oxalate dihydrate (in terms of C₂O₄Mn_{0.40}Fe_{0.593}V_{0.004}Ni_{0.003}•2H₂O) obtained in step S1, 1794.9g; lithium carbonate, 369.8 g; ammonium dihydrogen phosphate, 1148.9 g; silicate, 0.8 g; water, 20 L; |
| Example 29 | Li_{1.001}Mn_{0.40}Fe_{0.393}V_{0.204}Ni_{0.003}P_{0.999}Si_{0.001}O₄ | Manganese carbonate, 459.7g; ferrous carbonate, 455.2g; vanadium dichloride, 248.6g; nickel carbonate, 3.6 g; water, 5 L; oxalic acid dihydrate, 1260.6 g; | Ferromanganese vanadium nickel oxalate dihydrate (in terms of C₂O₄Mn_{0.40}Fe_{0.393}V_{0.204}Ni_{0.003}•2H₂O) obtained in step S1, 1785.1g; lithium carbonate, 369.8 g; ammonium dihydrogen phosphate, 1148.9 g; silicate, 0.8 g; water, 20 L; |

**Table 2: Preparation of first coating layer suspension (Step S3)**

| Example number | Coating substance of first coating layer | Preparation of first coating layer suspension |
|---|---|---|
| Comparative Examples 3 and 16 | Amorphous Li₂FeP₂O₇ | 7.4 g of lithium carbonate; 11.6 g of ferrous carbonate; 23.0 g of ammonium dihydrogen phosphate; 12.6 g of oxalic acid dihydrate; with a pH value controlled to be 5 |
| Comparative Examples 11, 13 to 15, and 17, and Examples 1 to 14, 19, 21 to 29 | Crystalline Li₂FeP₂O₇ | 7.4 g of lithium carbonate; 11.6 g of ferrous carbonate; 23.0 g of ammonium dihydrogen phosphate; 12.6 g of oxalic acid dihydrate; with a pH value controlled to be 5 |
| Examples 15 and 16 | Crystalline Al₄(P₂O₇)₃ | 53.3 g of aluminum chloride; 34.5 g of ammonium dihydrogen phosphate; 18.9 g of oxalic acid dihydrate; with a pH value controlled to be 4 |
| Examples 17, 18, and 20 | Crystalline Li₂NiP₂O₇ | 7.4 g of lithium carbonate; 11.9 g of nickel carbonate; 23.0 g of ammonium dihydrogen phosphate; 12.6 g of oxalic acid dihydrate; with a pH value controlled to be 5 |

**Table 3: Application of first coating layer (Step S4)**

| No. | Coating substance of first coating layer and amount thereof (based on weight of core) | Amount of core added in step S4 | Step S4: Application of first coating layer | | | | |
|---|---|---|---|---|---|---|---|
| | | | Amount of corresponding coating substance in the first coating layer suspension | Mixing time (h) | Drying temperature (°C) | Sintering temperature (°C) | Sintering time (h) |
| Comparative Example 3 | 2% amorphous Li₂FeP₂O₇ | 1570.4 g | 31.4 g | 6 | 120 | 500 | 4 |
| Comparative Example 11 | 1% crystalline Li₂FeP₂O₇ | 1571.1 g | 15.7 g | 6 | 120 | 650 | 6 |
| Comparative Example 13 | 2% crystalline Li₂FeP₂O₇ | 1568.5 g | 31.4 g | 6 | 120 | 650 | 6 |
| Comparative Example 14 | 2% crystalline Li₂FeP₂O₇ | 1562.8 g | 31.2 g | 6 | 120 | 650 | 6 |
| Comparative Example 15 | 2% crystalline Li₂FeP₂O₇ | 1570.6 g | 31.4 g | 6 | 120 | 650 | 6 |
| Comparative Example 16 | 2% amorphous Li₂FeP₂O₇ | 1571.1 g | 31.4 g | 6 | 120 | 500 | 4 |
| Comparative Example 17 | 2% crystalline Li₂FeP₂O₇ | 1571.1 g | 31.4 g | 6 | 120 | 650 | 6 |
| Examples 1 to 4 and 8 to 10 | 1% Li₂FeP₂O₇ | 1571.9 g | 15.7 g | 6 | 120 | 650 | 6 |
| Example 5 | 2% Li₂FeP₂O₇ | 1571.9 g | 31.4 g | 6 | 120 | 650 | 6 |
| Example 6 | 3% Li₂FeP₂O₇ | 1571.1 g | 47.1 g | 6 | 120 | 650 | 6 |
| Example 7 | 5% Li₂FeP₂O₇ | 1571.9 g | 78.6 g | 6 | 120 | 650 | 6 |
| Example 11 | 1% Li₂FeP₂O₇ | 1572.1 g | 15.7 g | 6 | 120 | 650 | 6 |
| Example 12 | 1% Li₂FeP₂O₇ | 1571.7 g | 15.7 g | 6 | 120 | 650 | 6 |
| Example 13 | 2% Li₂FeP₂O₇ | 1571.4 g | 31.4 g | 6 | 120 | 650 | 6 |
| Example 14 | 2.5% Li₂FeP₂O₇ | 1571.9 g | 39.3 g | 6 | 120 | 650 | 6 |
| Example 15 | 2% Al₄(P₂O₇)₃ | 1571.9 g | 31.4 g | 6 | 120 | 680 | 8 |
| Example 16 | 3% Al₄(P₂O₇)₃ | 1571.9 g | 47.2 g | 6 | 120 | 680 | 8 |
| Example 17 | 1.5% Li₂NiP₂O₇ | 1571.9 g | 23.6 g | 6 | 120 | 630 | 6 |
| Example 18 | 1% Li₂NiP₂O₇ | 1570.1 g | 15.7 g | 6 | 120 | 630 | 6 |
| Example 19 | 2% Li₂FeP₂O₇ | 1571.0 g | 31.4 g | 6 | 120 | 650 | 6 |
| Example 20 | 1% Li₂NiP₂O₇ | 1571.9 g | 15.7 g | 6 | 120 | 630 | 6 |
| Examples 21 to 24 | 2% Li₂FeP₂O₇ | 1572.1 g | 31.4 g | 6 | 120 | 650 | 6 |
| Example 22 | 5.50% Li₂FeP₂O₇ | 1572.1 g | 86.5 g | 6 | 120 | 650 | 6 |
| Example 25 | 1% Li₂FeP₂O₇ | 1573.0 g | 15.7 g | 6 | 120 | 650 | 6 |
| Example 26 | 1% Li₂FeP₂O₇ | 1568.6 g | 15.7 g | 6 | 120 | 650 | 6 |
| Example 27 | 1% Li₂FeP₂O₇ | 1569.2 g | 15.7 g | 6 | 120 | 650 | 6 |
| Example 28 | 2% crystalline Li₂FeP₂O₇ | 1573.9 g | 31.4 g | 6 | 120 | 650 | 6 |
| Example 29 | 2% crystalline Li₂FeP₂O₇ | 1564.1 g | 31.2 g | 6 | 120 | 650 | 6 |

**Table 4: Preparation of second coating layer suspension (Step S5)**

| Example number | Substance of second coating layer | Step S5: Preparation of second coating layer suspension |
|---|---|---|
| Comparative Examples 12; Examples 1 to 14, 18 to 19, and 25 to 27 | Crystalline LiFePO₄ | 3.7 g of lithium carbonate; 11.6 g of ferrous carbonate; 11.5 g of ammonium dihydrogen phosphate; 12.6 g of oxalic acid dihydrate |
| Comparative Examples 13 to 16; Examples 15, 17, 20, 21 to 24, and 28 to 29 | Crystalline LiCoPO₄ | 3.7 g of lithium carbonate; 15.5 g of cobalt sulfate; 11.5 g of ammonium dihydrogen phosphate; 12.6 g of oxalic acid dihydrate |
| Comparative Example 17 | Amorphous LiCoPO₄ | 3.7 g of lithium carbonate; 15.5 g of cobalt sulfate; 11.5 g of ammonium dihydrogen phosphate; 12.6 g of oxalic acid dihydrate |
| Example 16 | Crystalline LiNiPO₄ | 3.7 g of lithium carbonate; 11.9 g of nickel carbonate; 11.5 g of ammonium dihydrogen phosphate; 12.6 g of oxalic acid dihydrate |

**Table 5: Application of second coating layer (Step S6)**

| No. | Substance of second coating layer and amount thereof (based on weight of core) | Amount of pyrophosphate-coated material added in step S6 (amount of core added in the case of Comparative Example 12) (g) | Step S6: Application of second coating layer | | | | |
|---|---|---|---|---|---|---|---|
| | | | Amount of corresponding coating substance in second coating layer suspension | Mixing time (h) | Drying temperature (°C) | Sintering temperature (°C) | Sintering time (h) |
| Comparative Example 12 | 3% LiFePO₄ | 1571.1 | 47.1 | 6 | 120 | 700 | 8 |
| Comparative Example 13 | 4% LiCoPO₄ | 1599.9 | 62.7 | 6 | 120 | 750 | 8 |
| Comparative Example 14 | 4% LiCoPO₄ | 1594.0 | 62.5 | 6 | 120 | 750 | 8 |
| Comparative Example 15 | 4% LiCoPO₄ | 1602.0 | 62.8 | 6 | 120 | 750 | 8 |
| Comparative Example 16 | 4% LiCoPO₄ | 1602.5 | 62.8 | 6 | 120 | 750 | 8 |
| Comparative Example 17 | 4% amorphous LiCoPO₄ | 1602.5 | 62.8 | 6 | 120 | 650 | 8 |
| Examples 1 to 4 | 3% LiFePO₄ | 1586.8 | 47.1 | 6 | 120 | 700 | 8 |
| Example 5 | 3% LiFePO₄ | 1602.5 | 47.1 | 6 | 120 | 700 | 8 |
| Example 6 | 3% LiFePO₄ | 1618.2 | 47.1 | 6 | 120 | 700 | 8 |
| Example 7 | 3% LiFePO₄ | 1649.6 | 47.1 | 6 | 120 | 700 | 8 |
| Example 8 | 1% LiFePO₄ | 1586.8 | 15.7 | 6 | 120 | 700 | 8 |
| Example 9 | 4% LiFePO₄ | 1586.8 | 62.8 | 6 | 120 | 700 | 8 |
| Example 10 | 5% LiFePO₄ | 1586.8 | 78.6 | 6 | 120 | 700 | 8 |
| Example 11 | 2.50% LiFePO₄ | 1587.8 | 39.3 | 6 | 120 | 700 | 8 |
| Example 12 | 3% LiFePO₄ | 1587.4 | 47.2 | 6 | 120 | 700 | 8 |
| Example 13 | 2% LiFePO₄ | 1602.8 | 31.4 | 6 | 120 | 700 | 8 |
| Example 14 | 3.50% LiFePO₄ | 1610.5 | 55.0 | 6 | 120 | 700 | 8 |
| Example 15 | 2.5% LiCoPO₄ | 1603.3 | 39.3 | 6 | 120 | 750 | 8 |
| Example 16 | 3% LiNiPO₄ | 1619.0 | 47.2 | 6 | 120 | 680 | 8 |
| Example 17 | 2.5% LiCoPO₄ | 1595.5 | 39.3 | 6 | 120 | 750 | 8 |
| Example 18 | 3% LiFePO₄ | 1585.9 | 47.1 | 6 | 120 | 700 | 8 |
| Example 19 | 4% LiFePO₄ | 1602.4 | 62.8 | 6 | 120 | 700 | 8 |
| Example 20 | 3% LiCoPO₄ | 1587.7 | 47.2 | 6 | 120 | 750 | 8 |
| Example 21 | 4% LiCoPO₄ | 1603.5 | 62.9 | 6 | 120 | 750 | 8 |
| Example 22 | 4% LiCoPO₄ | 1658.6 | 62.9 | 6 | 120 | 750 | 8 |
| Example 23 | 5.50% LiCoPO₄ | 1603.5 | 86.5 | 6 | 120 | 750 | 8 |
| Example 24 | 4% LiCoPO₄ | 1603.5 | 62.9 | 6 | 120 | 750 | 8 |
| Example 25 | 3% LiFePO₄ | 1588.7 | 47.2 | 6 | 120 | 700 | 8 |
| Example 26 | 3% LiFePO₄ | 1584.3 | 47.1 | 6 | 120 | 700 | 8 |
| Example 27 | 3% LiFePO₄ | 1584.9 | 47.1 | 6 | 120 | 700 | 8 |
| Example 28 | 4% LiCoPO₄ | 1605.4 | 63.0 | 6 | 120 | 750 | 8 |
| Example 29 | 4% LiCoPO₄ | 1605.4 | 63.0 | 6 | 120 | 750 | 8 |

**Table 6: Application of third coating layer (Step S8)**

| | Third coating layer | molar ratio of SP2 to SP3 | Amount of two-layer-coated material added in step S8 (where amounts of Comparative Examples 1 and 2, and 4 to10 are the amount of core added and amount of Comparative Example 11 is the amount of first-layer-coated material added) (g) | Step S8: Application of third coating layer | | | | |
|---|---|---|---|---|---|---|---|---|
| | | | | Amount of sucrose (g) | Mixing time (h) | Drying temperature (°C) | Sintering temperature (°C) | Sintering time (h) |
| Comparative Example 1 | 1% carbon | 2.5 | 1568.5 | 37.3 | 6 | 150 | 650 | 8 |
| Comparative Example 2 | 2% carbon | 2.8 | 1572.2 | 74.7 | 6 | 150 | 680 | 8 |
| Comparative Example 3 | 2% carbon | 2.7 | 1601.8 | 74.6 | 6 | 150 | 680 | 7 |
| Comparative Example 4 | 1% carbon | 2.4 | 1571.0 | 37.3 | 6 | 150 | 630 | 8 |
| Comparative Example 5 | 1.5% carbon | 2.6 | 1570.6 | 56.0 | 6 | 150 | 650 | 7 |
| Comparative Example 6 | 2.5% carbon | 2.8 | 1573.6 | 93.4 | 6 | 150 | 680 | 8 |
| Comparative Example 7 | 1% carbon | 2.7 | 1572.2 | 37.3 | 6 | 150 | 680 | 7 |
| Comparative Example 8 | 1.5% carbon | 2.9 | 1571.1 | 56.0 | 6 | 150 | 680 | 10 |
| Comparative Example 9 | 1% carbon | 2.2 | 1572.2 | 37.3 | 6 | 150 | 600 | 8 |
| Comparative Example 10 | 1% carbon | 2.4 | 1571.1 | 37.3 | 6 | 150 | 630 | 8 |
| Comparative Example 11 | 1% carbon | 2.3 | 1586.8 | 37.3 | 6 | 150 | 620 | 8 |
| Comparative Example 12 | 1% carbon | 2.1 | 1618.2 | 37.3 | 6 | 150 | 600 | 6 |
| Comparative Example 13 | 1% carbon | 2 | 1662.6 | 37.3 | 6 | 120 | 600 | 6 |
| Comparative Example 14 | 1% carbon | 1.8 | 1656.5 | 37.1 | 6 | 120 | 600 | 6 |
| Comparative Example 15 | 1% carbon | 1.7 | 1664.8 | 37.3 | 6 | 100 | 600 | 6 |
| Comparative Example 16 | 1% carbon | 3.1 | 1665.4 | 37.3 | 6 | 150 | 700 | 10 |
| Comparative Example 17 | 1% carbon | 3.5 | 1665.4 | 37.3 | 6 | 150 | 750 | 10 |
| Example 1 | 1% carbon | 2.2 | 1633.9 | 37.3 | 6 | 150 | 700 | 10 |
| Example 2 | 3% carbon | 2.3 | 1633.9 | 111.9 | 6 | 150 | 600 | 9 |
| Example 3 | 4% carbon | 2.1 | 1633.9 | 149.2 | 6 | 150 | 600 | 6 |
| Example 4 | 5% carbon | 2.4 | 1633.9 | 186.5 | 6 | 150 | 630 | 8 |
| Example 5 | 1% carbon | 2.5 | 1649.6 | 37.3 | 6 | 150 | 650 | 8 |
| Example 6 | 1% carbon | 2.5 | 1665.3 | 37.3 | 6 | 150 | 650 | 8 |
| Example 7 | 1% carbon | 2.4 | 1696.7 | 37.3 | 6 | 150 | 630 | 8 |
| Example 8 | 1% carbon | 2.3 | 1602.5 | 37.3 | 6 | 150 | 600 | 9 |
| Example 9 | 1% carbon | 2.2 | 1649.6 | 37.3 | 6 | 150 | 600 | 8 |
| Example 10 | 1% carbon | 2.2 | 1665.3 | 37.3 | 6 | 150 | 600 | 9 |
| Example 11 | 1.5% carbon | 2.3 | 1629.0 | 56.1 | 6 | 150 | 600 | 9 |
| Example 12 | 2% carbon | 2.4 | 1634.6 | 74.7 | 6 | 150 | 630 | 8 |
| Example 13 | 2% carbon | 2.5 | 1634.2 | 74.6 | 6 | 150 | 650 | 8 |
| Example 14 | 2.5% carbon | 2.7 | 1665.5 | 93.3 | 6 | 150 | 680 | 7 |
| Example 15 | 2% carbon | 2.8 | 1642.6 | 74.7 | 6 | 150 | 680 | 8 |
| Example 16 | 1% carbon | 2.7 | 1666.2 | 37.3 | 6 | 150 | 680 | 7 |
| Example 17 | 1.5% carbon | 2.3 | 1634.8 | 56.0 | 6 | 150 | 600 | 9 |
| Example 18 | 1% carbon | 2.6 | 1633.0 | 37.3 | 6 | 150 | 650 | 7 |
| Example 19 | 1.5% carbon | 2.4 | 1665.2 | 56.0 | 6 | 150 | 630 | 8 |
| Example 20 | 1.5% carbon | 2.2 | 1634.8 | 56.0 | 6 | 150 | 600 | 9 |
| Example 21 | 1% carbon | 2.2 | 1666.4 | 37.3 | 6 | 150 | 600 | 9 |
| Example 22 | 1% carbon | 2.3 | 1721.4 | 37.3 | 6 | 150 | 600 | 9 |
| Example 23 | 1% carbon | 2.4 | 1690.0 | 37.3 | 6 | 150 | 630 | 8 |
| Example 24 | 5.5% carbon | 2.6 | 1666.4 | 205.4 | 6 | 150 | 650 | 7 |
| Example 25 | 1% carbon | 2.4 | 1635.9 | 37.4 | 6 | 150 | 630 | 8 |
| Example 26 | 1% carbon | 2.3 | 1631.3 | 37.3 | 6 | 150 | 600 | 9 |
| Example 27 | 1.5% carbon | 2.1 | 1631.9 | 55.9 | 6 | 150 | 600 | 6 |
| Example 28 | 1% carbon | 0.07 | 1668.3 | 37.4 | 6 | 80 | 600 | 6 |
| Example 29 | 1% carbon | 13 | 1668.3 | 37.4 | 6 | 150 | 850 | 10 |

### Examples 30 to 42: Examination of other coating layer substances

Examples 30-42 were carried out in a method similar to Example 30 to 42, with the differences described in Tables 7 to 9 below.

**Table 7: Examination of first coating layer substance**

| No. | Coating substance of first coating layer | Preparation of first coating layer suspension |
|---|---|---|
| Example 30 | Li₂MgP₂O₇ | 7.4 g of lithium carbonate; 8.4 g of magnesium carbonate; 23.0 g of ammonium dihydrogen phosphate; 12.6 g of oxalic acid dihydrate |
| Example 31 | Li₂CoP₂O₇ | 7.4 g of lithium carbonate; 15.5 g of cobalt sulfate; 23.0 g of ammonium dihydrogen phosphate; 12.6 g of oxalic acid dihydrate |
| Example 32 | Li₂CuP₂O₇ | 7.4 g of lithium carbonate; 16.0 g of copper sulfate; 23.0 g of ammonium dihydrogen phosphate; 12.6 g of oxalic acid dihydrate |
| Example 33 | Li₂ZnP₂O₇ | 7.4 g of lithium carbonate; 12.5 g of zinc carbonate; 23.0 g of ammonium dihydrogen phosphate; 12.6 g of oxalic acid dihydrate |
| Example 34 | TiP₂O₇ | 24.0 g of titanium sulfate; 23.0 g of ammonium dihydrogen phosphate; 12.6 g of oxalic acid dihydrate |
| Example 35 | Ag₄P₂O₇ | 67.9 g of silver nitrate; 23.0 g of ammonium dihydrogen phosphate; 25.2 g of oxalic acid dihydrate |
| Example 36 | ZrP₂O₇ | 56.6 g of zirconium sulfate; 23.0 g of ammonium dihydrogen phosphate; 25.2 g of oxalic acid dihydrate |

**Table 8: Examination of second coating layer substance**

| No. | Substance of second coating layer | Preparation of second coating layer suspension |
|---|---|---|
| Example 37 | Cu₃(PO₄)₂ | 48.0 g of copper sulfate; 23.0 g of ammonium dihydrogen phosphate; 37.8 g of oxalic acid dihydrate |
| Example 38 | Zn₃(PO₄)₂ | 37.6 g of zinc carbonate; 23.0 g of ammonium dihydrogen phosphate; 37.8 g of oxalic acid dihydrate |
| Example 39 | Ti₃(PO₄)₄ | 72.0 g of titanium sulfate; 46.0 g of ammonium dihydrogen phosphate; 75.6 g of oxalic acid dihydrate |
| Example 40 | Ag₃PO₄ | 50.9 g of silver nitrate; 11.5 g of ammonium dihydrogen phosphate; 18.9 g of oxalic acid dihydrate; |
| Example 41 | Zr₃(PO₄)₄ | 85.0 g of zirconium sulfate; 46.0 g of ammonium dihydrogen phosphate; 37.8 g of oxalic acid dihydrate; |
| Example 42 | AlPO₄ | 13.3 g of aluminum chloride; 11.5 g of ammonium dihydrogen phosphate; 18.9 g of oxalic acid dihydrate |

### II. Performance evaluation

### 1. Test method of lattice change rate:

At a constant temperature of 25°C, the positive electrode active material samples were placed in an XRD instrument (model: Bruker D8 Discover), and the samples were tested at 1°/min. The test data were organized and analyzed, and the lattice constants a0, b0, c0, and v0 (where a0, b0, and c0 represent the lengths of faces of the unit cell, and v0 is the volume of the unit cell, which can be obtained directly from XRD refinement results) at that point were calculated with reference to standard PDF cards.

The positive electrode active material samples were prepared into button batteries using the button battery preparation method in the foregoing examples, and the button batteries were charged at a small rate of 0.05C until the current was reduced to 0.01C. The positive electrode plate was then taken out from the button battery and placed in dimethyl carbonate (DMC) for 8 hours, then dried, and scraped for powder, and particles with a particle size less than 500 nm were sifted out from the powder. Samples were taken and subjected to the same way as the fresh samples under test above to calculate their crystal cell volumes v1, and (v0 - v1)/v0 × 100% was taken as their lattice change rates (crystal cell volume change rate) before and after complete lithium deintercalation and intercalation to be listed in the table.

### 2. Li/Mn anti-site defect concentration

The XRD results tested in "test method of lattice change rate" were compared with the PDF (Powder Diffraction File) card of the standard crystal to obtain the Li/Mn anti-site defect concentration. Specifically, the XRD results tested in the "test method of lattice change rate" were imported into the general structural analysis system (GSAS) software to automatically derive the refinement results, which contain the occupancy of the different atoms, and then the Li/Mn anti-site defect concentration was obtained by reading the refinement results.

### 3. Compacted density

5 g of the foregoing prepared positive electrode active material powder was taken and put in a special mold for compaction (CARVER mold, model 13 mm, USA), and then the mold was put on the compacted density apparatus. A pressure of 3 tons was applied, the thickness of the powder under pressure (thickness after pressure relief) on the apparatus was read, and the compacted density was calculated based on ρ=m/v, where the area value used was the area of standard small picture, 1540.25 mm².

### 4. Ratio of 3C constant current charge

New full cells prepared from the foregoing examples and comparative examples were left standing for 5 min at 25°C in a constant temperature environment and discharged to 2.5 V at 1/3C. The full cells were left standing for 5 min, charged to 4.3 V at 1/3C, and then charged at a constant voltage of 4.3 V to a current less than or equal to 0.05 mA. The full cells were left standing for 5 min. The charge capacity at that point was recorded as C0. The full cells were discharged at 1/3C to 2.5 V, left standing for 5 min, then charged at 3C to 4.3 V, and left standing for 5 min. The charge capacity at that point was recorded as C1. The ratio of 3C constant current charge was C1/C0×100%.

A higher ratio of 3C constant current charge indicates better rate performance of the secondary battery.

### 5. Transition metal Mn (and Mn-site doped Fe) dissolution test

Full cells prepared in the foregoing examples and comparative examples were cycled at 45°C until capacity faded to 80% and discharged to a cut-off voltage of 2.0 V at 0.1C. The battery was then disassembled, the negative electrode plate was removed, and 30 discs with a unit area (1540.25 mm2) were randomly taken on the negative electrode plate and tested by using Agilent ICP-OES730 for inductively coupled plasma atomic emission spectrometry (ICP). The amounts of Fe (if the Mn site of the positive electrode active material was doped with Fe) and Mn were calculated from the ICP results, so as to calculate the dissolving-out amount of Mn (and Fe doped at the Mn site) after the cycling. The test standard is in accordance with EPA-6010D-2014.

### 6. Surface oxygen valence

5 g of the foregoing prepared positive electrode active material sample was taken to prepare into a button battery according to the preparation method of button battery as described in the foregoing examples. The button battery was charged at a small rate of 0.05C until the current was reduced to 0.01C. The positive electrode plate was then taken out from the button battery and placed in DMC for 8 hours, then dried, and scraped for powder, and particles with a particle size less than 500 nm were sifted out from the powder. The obtained particles were measured by using electron energy loss spectroscopy (EELS; the model of the instrument used was Talos F200S) to obtain energy loss near edge structures (ELNES) that reflect the density of states and energy level distribution of elements. Based on the density of states and energy level distribution, the number of occupying electrons was calculated by integrating the data of the valence band density of states to deduce the valence state of surface oxygen after charging.

### 7. Measurement of elements manganese and phosphorus in positive electrode active material

5 g of the foregoing prepared positive electrode active material was dissolved in 100 ml of inverse aqua regia (concentrated hydrochloric acid concentrated nitric acid = 1:3) (concentration of concentrated hydrochloric acid is about 37%, and concentration of concentrated nitric acid is about 65%), the proportion of each element in the solution was tested using ICP, and then the proportion of element manganese or element phosphorus (amount of element manganese or element phosphorus/amount of positive electrode active material × 100%) was measured and converted to get its weight percentage.

### 8. Initial gram capacity test method of button battery

Under a voltage of 2.5 V to 4.3 V, the prepared button batteries of the foregoing examples and comparative examples were charged to 4.3 V at 0.1C, then charged at constant voltage of 4.3 V to a current less than or equal to 0.05 mA, left standing for 5 min, and then discharged to 2.0 V at 0.1C. The discharge capacity at that point was an initial gram capacity and recorded as D0.

### 10. Cell swelling test of full cell after 30 days of storage at 60°C:

The prepared full cells of the foregoing examples and comparative examples at 100% state of charge (SOC) were stored at 60°C. The open circuit voltage (OCV) and alternating current internal resistance (IMP) of the cells were measured before, during, and after storage to monitor the SOCs, and the volumes of the cells were measured. The full cells were taken out after every 48 h of storage and left standing for 1 h. Then the open circuit voltage (OCV) and internal resistance (IMP) were measured, and the cell volumes were measured by a drainage method after the cells were cooled to room temperature. In the drainage method, first a scale that automatically performs unit conversion on dial data was used to separately measure a weight of the cell, denoted as F1, then the cell was completely placed into deionized water (density given to be 1 g/cm3), and the weight of the cell at that point was measured as F2. The buoyant force experienced by the cell, denoted as F_{buoyant}, was calculated as F1 - F2. Then, according to Archimedes' principle, F_{buoyant} = ρ × g × V_{displaced}, the volume V of the cell could be calculated as V = (F1 - F2)/(p × g).

It can be learned from the OCV and IMP test results that the batteries of all the examples always maintained an SOC of higher than 99% throughout the storage test.

After 30 days of storage, the cell volumes were measured and the percentage increases in the cell volumes after storage relative to the cell volumes before storage were calculated.

### 11. 45°C cycling performance test of full cell

At a constant temperature of 45°C, the battery was charged to 4.3 V at 1C under a voltage of 2.5 V to 4.3 V, and then charged to a current less than or equal to 0.05 mA at a constant voltage of 4.3 V. After being left standing for 5 min, the battery was discharged to 2.5 V at 1C, and a capacity at that point was recorded as Dn (n = 0, 1, 2, ...). The previous process was repeated until the capacity was faded (fading) to 80%, and the number of repetitions at that point was record, which is the number of cycles corresponding to 80% capacity retention rate at 45°C.

### 12. Interplanar spacing and included angle test

1 g of each prepared positive electrode active material powder was taken and placed into a 50 mL test tube, 10 mL of alcohol with a mass fraction of 75% was injected into the test tube, and the substances were then fully stirred and dispersed for 30 minutes. Then an appropriate amount of the solution was taken with a clean disposable plastic pipette and added dropwise on a 300 mesh copper grid. At that point, part of the powder would remain on the copper grid. The copper grid with the sample was transferred to the TEM (Talos F200s G2) sample cavity for testing, and original TEM test images were obtained and saved in an original image format (xx.dm3).

The original image obtained from the TEM test was opened in DigitalMicrograph software, and Fourier transform was performed (done automatically by the software upon clicking) to obtain a diffraction pattern. A distance from the diffraction spot to the center of the diffraction pattern was measured to obtain the interplanar spacing, and the included angle was calculated according to the Bragg equation.

By comparing the obtained interplanar spacing and corresponding included angle with their respective standard values, the different substances in the coating layers could be identified.

### 13. Coating layer thickness test

The thickness of the coating was tested mainly in the following manner. A thin slice of about 100 nm thickness was cut from the middle of a single particle of the prepared positive electrode active material by FIB, then a TEM test was performed on the thin slice, and original TEM test images were obtained and saved in an original image format (xx.dm3).

The original image obtained from the TEM test was opened in DigitalMicrograph software, the coating was identified by using the information of the lattice spacing and included angle, and the thickness of the coating was measured.

The thicknesses at three locations were measured for the selected particle and the average value was taken.

### 14. Measurement of molar ratio of SP2 carbon to SP3 carbon in the carbon in third coating layer

This test was performed by Raman (Raman) spectroscopy. The energy spectrum of the Raman test was split to obtain Id/Ig, where Id is a peak intensity of SP3 carbon and Ig is a peak intensity of SP2 carbon, and then the molar ratio therebetween was determined.

The performance test results of all the examples and the comparative examples are shown in the following tables.

**Table 9: Performance of positive electrode active material powder and battery performance of the prepared batteries of Examples 1 to 29 and Comparative Examples 1 to 17**

| Example number | Performance of positive electrode active material powder | | | | | Battery performance | | | |
|---|---|---|---|---|---|---|---|---|---|
| | Lattice change rate (%) | Li/Mn anti-site defect concentration (%) | Compacted density (g/cm³) | Surface oxygen valence | Dissolving-out amounts of Mn and Fe after cycling (ppm) | Ratio of 3C constant current charge (%) | Button cell capacity at 0.1C (mAh/g) | Cell swelling rate after 30 days of storage at 60°C (%) | Number of cycles at 80% capacity retention rate at 45°C |
| Comparative Example 1 | 11.4 | 5.2 | 1.5 | -1.55 | 2015 | 55.6 | 126.1 | 46.3 | 235 |
| 2 | 10.6 | 3.3 | 1.67 | -1.51 | 1768 | 60.1 | 127.1 | 45.2 | 296 |
| 3 | 10.8 | 3.4 | 1.64 | -1.64 | 1681 | 57.7 | 145.3 | 39.5 | 425 |
| 4 | 4.3 | 2.8 | 1.69 | -1.82 | 1054 | 61.4 | 151.6 | 6.9 | 604 |
| 5 | 2.8 | 2.5 | 1.65 | -1.85 | 28 | 63.7 | 148.8 | 6.1 | 711 |
| 6 | 3.4 | 2.4 | 1.61 | -1.86 | 60 | 63.7 | 150.1 | 7 | 726 |
| 7 | 4.5 | 2.4 | 1.73 | -1.83 | 82 | 64.5 | 148.9 | 6.8 | 714 |
| 8 | 2.3 | 2.4 | 1.68 | -1.89 | 27 | 64.8 | 152.9 | 5.6 | 703 |
| 9 | 2.3 | 2.4 | 1.75 | -1.89 | 28 | 65.5 | 152.6 | 5.7 | 722 |
| 10 | 2.3 | 2.2 | 1.81 | -1.9 | 23 | 69.6 | 154.6 | 5.8 | 733 |
| 11 | 2.3 | 2.2 | 1.92 | -1.92 | 9 | 70.7 | 154.6 | 3.9 | 1036 |
| 12 | 2.3 | 2.1 | 1.95 | -1.95 | 16 | 71.1 | 155 | 2.6 | 845 |
| 13 | 11.4 | 5.2 | 1.63 | -1.96 | 51 | 57.9 | 130.4 | 3.9 | 615 |
| 14 | 8.1 | 3.8 | 1.76 | -1.96 | 38 | 63.7 | 135.4 | 3.5 | 681 |
| 15 | 2 | 1.8 | 2.13 | -1.96 | 6 | 66.8 | 154.7 | 2.4 | 1174 |
| 16 | 2 | 1.9 | 1.95 | -1.96 | 14 | 66.3 | 153.2 | 3 | 1066 |
| 17 | 2 | 1.9 | 1.9 | -1.89 | 21 | 65.7 | 152.7 | 3.5 | 947 |
| Example 1 | 2.5 | 1.8 | 2.35 | -1.93 | 6 | 75.7 | 157.7 | 2.5 | 1180 |
| 2 | 2.5 | 1.8 | 2.24 | -1.94 | 4 | 75.8 | 156.6 | 2.2 | 1308 |
| 3 | 2.5 | 1.8 | 2.22 | -1.94 | 4 | 75.6 | 155.7 | 1.8 | 1421 |
| 4 | 2.5 | 1.8 | 2.21 | -1.95 | 3 | 75.6 | 154.1 | 1.4 | 1459 |
| 5 | 2.5 | 1.8 | 2.33 | -1.93 | 4 | 75.6 | 157 | 1.5 | 1551 |
| 6 | 2.5 | 1.8 | 2.31 | -1.93 | 3 | 75.4 | 156.6 | 1.3 | 1628 |
| 7 | 2.5 | 1.8 | 2.28 | -1.93 | 3 | 73.9 | 156.1 | 1.1 | 1697 |
| 8 | 2.5 | 1.8 | 2.29 | -1.93 | 7 | 74.4 | 156.9 | 1.8 | 1104 |
| 9 | 2.5 | 1.8 | 2.46 | -1.98 | 5 | 78.9 | 157.8 | 1.4 | 1336 |
| 10 | 2.5 | 1.8 | 2.49 | -1.98 | 4 | 80.7 | 158.1 | 1 | 1531 |
| 11 | 2.6 | 1.9 | 2.38 | -1.97 | 4 | 78.1 | 157.5 | 1.8 | 1074 |
| 12 | 2.4 | 1.8 | 2.41 | -1.97 | 3 | 80.1 | 156.6 | 1.1 | 1188 |
| 13 | 2.7 | 1.9 | 2.42 | -1.97 | 3 | 80.5 | 156.9 | 2 | 1257 |
| 14 | 2.8 | 1.9 | 2.45 | -1.97 | 2 | 82 | 154.4 | 2.3 | 1355 |
| 15 | 2.2 | 1.9 | 2.46 | -1.97 | 2 | 79.6 | 154.1 | 2.2 | 1156 |
| 16 | 2.1 | 1.9 | 2.47 | -1.98 | 4 | 78.6 | 154.5 | 2.1 | 1182 |
| 17 | 2.5 | 1.7 | 2.41 | -1.98 | 3 | 80.9 | 155.8 | 3 | 1304 |
| 18 | 2.3 | 1.6 | 2.42 | -1.97 | 4 | 81.4 | 154.6 | 3.2 | 1429 |
| 19 | 2.2 | 1.7 | 2.43 | -1.97 | 3 | 82.3 | 154.7 | 3.1 | 1378 |
| 20 | 2.6 | 1.8 | 2.42 | -1.94 | 3 | 80.9 | 154.2 | 1.8 | 1506 |
| 21 | 2.4 | 1.7 | 2.41 | -1.97 | 2 | 81.9 | 154.7 | 2 | 1377 |
| 22 | 2.4 | 1.8 | 2.32 | -1.95 | 2 | 77.6 | 152.4 | 1.3 | 1606 |
| 23 | 2.3 | 1.7 | 2.46 | -1.96 | 2 | 81.8 | 151.9 | 0.9 | 1696 |
| 24 | 2.2 | 1.8 | 2.47 | -1.95 | 2 | 81.8 | 152.4 | 1 | 1594 |
| 25 | 2.1 | 1.7 | 2.49 | -1.98 | 2 | 84.2 | 158.9 | 1.4 | 1588 |
| 26 | 3.6 | 2.5 | 2.21 | -1.97 | 6 | 61.9 | 152.5 | 3.1 | 1064 |
| 27 | 2.8 | 2.1 | 2.24 | -1.98 | 5 | 79.6 | 155.8 | 2.3 | 1179 |
| 28 | 2.5 | 1.9 | 1.95 | -1.94 | 7 | 60.5 | 155.3 | 5.1 | 1033 |
| 29 | 2.4 | 1.8 | 1.98 | -1.95 | 6 | 73.9 | 155.9 | 3.2 | 1098 |

As can be seen in Table 9, compared with the comparative examples, the examples of this application achieve smaller lattice change rate, smaller Li/Mn anti-site defect concentration, greater compacted density, surface oxygen valence closer to -2 valence, less dissolving-out Mn and Fe after cycling, and better battery performance, for example, better high-temperature storage performance, and high-temperature cycling performance.

**Table 10: Thickness of each layer and weight ratio of element manganese to element phosphorus, for the positive electrode active materials prepared in Examples 1 to 14, and Comparative Examples 3, 4, 12**

| No. | Core | First coating layer | Second coating layer | Third coating layer | Thickness of first coating layer (nm) | Thickness of second coating layer (nm) | Thickness of third coating layer (nm) | Percentage of element Mn (wt%) | Weight ratio of element Mn to element P |
|---|---|---|---|---|---|---|---|---|---|
| Comparative Example 3 | LiMn_{0.80}Fe_{0.20}PO₄ | 2% Amorphous Li₂FeP₂O₇ | - | 2% Carbon | 4 | - | 10 | 26.1 | 1.383 |
| Comparative Example 4 | LiMn_{0.70}Fe_{0.295}V_{0.005}PO₄ | - | - | 1% Carbon | - | - | 5 | 24.3 | 1.241 |
| Comparative Example 12 | Li_{0.999}Mn_{0.60}Fe_{0.393}V_{0.004} Co_{0.003}P_{0.999}S_{0.001}O₄ | - | 3% Crystalline LiFePO₄ | 1% Carbon | - | 7.5 | 5 | 19.6 | 1.034 |
| Example 1 | Li_{0.997}Mn_{0.60}Fe_{0.393}V_{0.004} Co_{0.003}P_{0.997}S_{0.003}O₄ | 1% Li₂FeP₂O₇ | 3% LiFePO₄ | 1% Carbon | 2 | 7.5 | 5 | 19.0 | 1.023 |
| Example 2 | Li_{0.997}Mn_{0.60}Fe_{0.393}V_{0.004} Co_{0.003}P_{0.997}S_{0.003}O₄ | 1% Li₂FeP₂O₇ | 3% LiFePO₄ | 3% Carbon | 2 | 7.5 | 15 | 18.3 | 1.023 |
| Example 3 | Li_{0.997}Mn_{0.60}Fe_{0.393}V_{0.004} Co_{0.003}P_{0.997}S_{0.003}O₄ | 1% Li₂FeP₂O₇ | 3% LiFePO₄ | 4% Carbon | 2 | 7.5 | 20 | 18.0 | 1.023 |
| Example 4 | Li_{0.997}Mn_{0.60}Fe_{0.393}V_{0.004} Co_{0.003}P_{0.997}S_{0.003}O₄ | 1% Li₂FeP₂O₇ | 3% LiFePO₄ | 5% Carbon | 2 | 7.5 | 25 | 17.9 | 1.023 |
| Example 5 | Li_{0.997}Mn_{0.60}Fe_{0.393}V_{0.004} Co_{0.003}P_{0.997}S_{0.003}O₄ | 2% Li₂FeP₂O₇ | 3% LiFePO₄ | 1% Carbon | 4 | 7.5 | 5 | 18.7 | 1.011 |
| Example 6 | Li_{0.997}Mn_{0.60}Fe_{0.393}V_{0.004} Co_{0.003}P_{0.997}S_{0.003}O₄ | 3% Li₂FeP₂O₇ | 3% LiFePO₄ | 1% Carbon | 6 | 7.5 | 5 | 18.3 | 0.999 |
| Example 7 | Li_{0.997}Mn_{0.60}Fe_{0.393}V_{0.004} Co_{0.003}P_{0.997}S_{0.003}O₄ | 5% Li₂FeP₂O₇ | 3% LiFePO₄ | 1% Carbon | 10 | 7.5 | 5 | 17.6 | 0.975 |
| Example 8 | Li_{0.997}Mn_{0.60}Fe_{0.393}V_{0.004} Co_{0.003}P_{0.997}S_{0.003}O₄ | 1% Li₂FeP₂O₇ | 1% LiFePO₄ | 1% Carbon | 2 | 2.5 | 5 | 19.8 | 1.043 |
| Example 9 | Li_{0.997}Mn_{0.60}Fe_{0.393}V_{0.004} Co_{0.003}P_{0.997}S_{0.003}O₄ | 1% Li₂FeP₂O₇ | 4% LiFePO₄ | 1% Carbon | 2 | 10 | 5 | 18.7 | 1.014 |
| Example 10 | Li_{0.997}Mn_{0.60}Fe_{0.393}V_{0.004} Co_{0.003}P_{0.997}S_{0.003}O₄ | 1% Li₂FeP₂O₇ | 5% LiFePO₄ | 1% Carbon | 2 | 12.5 | 5 | 18.4 | 1.004 |
| Example 11 | Li_{1.001}Mn_{0.60}Fe_{0.393}V_{0.004} Co_{0.003}P_{0.999}Si_{0.001}O₄ | 1% Li₂FeP₂O₇ | 2.50% LiFePO₄ | 1.5% Carbon | 2 | 6.3 | 7.5 | 19.0 | 1.026 |
| Example 13 | Li_{0.995}Mn_{0.65}Fe_{0.341}V_{0.004} Co_{0.005}P_{0.995}S_{0.005}O₄ | 2% Li₂FeP₂O₇ | 2% LiFePO₄ | 2% Carbon | 4 | 5 | 10 | 18.7 | 1.108 |
| Example 14 | Li_{1.002}Mn_{0.70}Fe_{0.293}V_{0.004} Co_{0.003}P_{0.998}Si_{0.002}O₄ | 2.5% Li₂FeP₂O₇ | 3.50% LiFePO₄ | 2.5% Carbon | 5 | 8.8 | 12.5 | 17.8 | 1.166 |

As can be seen from Table 10, by doping the manganese and phosphorus sites of lithium manganese iron phosphate (containing 35% manganese and about 20% phosphorus) and applying three layers of coating, the proportion of element manganese and the weight ratio of element manganese to element phosphorus in the positive electrode active material are significantly reduced; furthermore, comparing Examples 1 to 14 with Comparative Examples 3, 4, and 12, it can be learned from Table 9 that the decrease of elements manganese and phosphorus in the positive electrode active material leads to the decrease of the dissolving-out amounts of manganese and iron and suppresses the improvement of the battery performance of the secondary batteries prepared therefrom.

**Table 11: Performance of positive electrode active material powder and battery performance of the prepared batteries of Examples 30 to 42**

| Example number | Performance of positive electrode active material powder | | | | | Battery performance | | | |
|---|---|---|---|---|---|---|---|---|---|
| | Lattice change rate (%) | Li/Mn anti-site defect concentration (%) | Compacted density (g/cm³) | Surface oxygen valence | Dissolving-out amounts of Mn and Fe after cycling (ppm) | Ratio of 3C constant current charge (%) | Button battery capacity at 0.1C | Cell swelling rate after 30 days of storage at 60°C (%) | Number of cycles at 80% capacity retention rate at 45°C |
| Example 1 | 2.5 | 1.8 | 2.35 | -1.93 | 6 | 75.7 | 157.7 | 2.5 | 1180 |
| Example 30 | 2.4 | 1.9 | 2.36 | -1.97 | 11 | 71.1 | 156.4 | 4.0 | 1036 |
| Example 31 | 2.5 | 1.7 | 2.36 | -1.96 | 10 | 72.1 | 155.9 | 3.6 | 1107 |
| Example 32 | 2.5 | 1.7 | 2.38 | -1.97 | 11 | 71.5 | 156.1 | 3.6 | 1070 |
| Example 33 | 2.6 | 1.8 | 2.39 | -1.98 | 20 | 71.5 | 156.2 | 4.5 | 1015 |
| Example 34 | 2.6 | 1.9 | 2.34 | -1.96 | 14 | 73.9 | 156.5 | 3.9 | 1023 |
| Example 35 | 2.4 | 1.7 | 2.36 | -1.94 | 8 | 73.3 | 157.8 | 4.5 | 1119 |
| Example 36 | 2.5 | 1.9 | 2.33 | -1.92 | 12 | 74.1 | 156.1 | 4.7 | 1042 |
| Example 37 | 2.5 | 1.7 | 2.34 | -1.92 | 16 | 70.6 | 156.3 | 4.3 | 1071 |
| Example 38 | 2.4 | 1.9 | 2.33 | -1.95 | 24 | 69.8 | 155.2 | 5.2 | 975 |
| Example 39 | 2.2 | 1.8 | 2.36 | -1.94 | 22 | 71.8 | 156.6 | 4.9 | 1031 |
| Example 40 | 2.4 | 1.9 | 2.37 | -1.91 | 27 | 74.3 | 156 | 4.6 | 1009 |
| Example 41 | 2.6 | 1.9 | 2.38 | -1.94 | 24 | 73.2 | 155.2 | 4.5 | 992 |
| Example 42 | 2.4 | 1.9 | 2.36 | -1.92 | 13 | 73.5 | 157.1 | 3.5 | 1170 |

As can be seen from Table 11, the use of the first coating layer and the second coating layer containing other elements within the scope of this application also obtained positive electrode active materials with good performance and achieved good battery performance results.

The first solvent, second solvent, and first additive in the electrolyte of Example 4 were sequentially replaced with the corresponding substances of amounts listed in Table 12 to form the respective batteries of Examples 43 to 71, where the percentage W1% and the percentage W2% add up to 100% and the percentage of the first additive W3% is measured based on the electrolyte.

**Table 12**

| Examples | First solvent | | First additive | | Mass percentage of second solvent W2 (%) |
|---|---|---|---|---|---|
| | Substance | Percentage W1 (%) | Substance | Percentage W3 (%) | |
| Example 43 | Same as Example 4 | 20 | | | 80 |
| Example 44 | | 80 | | | 20 |
| Example 45 | | 30 | | | 70 |
| Example 46 | | 75 | | | 25 |
| Example 47 | | 15 | | | 85 |
| Example 48 | | 85 | | Same as Example 4 | 15 |
| Example 49 | Solvent 2 | 50 | | | 50 |
| Example 50 | Solvent 3 | 50 | Same as Example 4 | | |
| Example 51 | Solvent 4 | 50 | | | |
| Example 52 | Solvent 5 | 50 | | | |
| Example 53 | Solvent 6 | 50 | | | |
| Example 54 | Same as Example 4 | | | 0.01 | 50 |
| Example 55 | | | | 20 | |
| Example 56 | | | | 0.1 | |
| Example 57 | | | | 10 | |
| Example 58 | | | | 0.3 | |
| Example 59 | | | | 5 | |
| Example 60 | | | | 7 | |
| Example 61 | | | | 15 | |
| Example 62 | | | | 25 | |
| Example 63 | | | Additive 9 | Same as Example 4 | |
| Example 64 | | | Additive 2 | | |
| Example 65 | | | Additive 3 | | |
| Example 66 | | | Additive 4 | | |
| Example 67 | | | Additive 5 | | |
| Example 68 | | | Additive 6 | | |
| Example 69 | | | Additive 7 | | |
| Example 70 | | | Additive 8 | | |
| Example 71 | Solvent 1 | 100 | Additive 1 | 20 | 0 |

The initial gram capacity (mAh/g) of the button battery at 0.1C, ratio of 3C constant current charge (%), number of cycles at 80% capacity retention rate at 45°C, and cell swelling rate after 30 days of storage at 60°C (%) were tested according to the above test method, and the test results were recorded in Table 13.

**Table 13**

| Example number | Button battery gram capacity at 0.1C (mAh/g) | Ratio of 3C constant current charge (%) | Cell swelling rate after 30 days of storage at 60°C (%) | Number of cycles corresponding to 80% capacity retention rate at 45°C |
|---|---|---|---|---|
| Example 43 | 153.3 | 68.1 | 3.1 | 1322 |
| Example 44 | 152.1 | 77.1 | 3.6 | 1231 |
| Example 45 | 153.5 | 73.8 | 3.3 | 1387 |
| Example 46 | 153.4 | 76.4 | 2.7 | 1387 |
| Example 47 | 153.4 | 67.5 | 3.2 | 1311 |
| Example 48 | 151.7 | 77.3 | 5.1 | 1197 |
| Example 49 | 153.4 | 70.6 | 2.9 | 1387 |
| Example 50 | 153.1 | 69.6 | 3.4 | 1367 |
| Example 51 | 152.7 | 69.4 | 3.5 | 1342 |
| Example 52 | 152.5 | 69.1 | 3.6 | 1321 |
| Example 53 | 152.8 | 69.0 | 3.7 | 1333 |
| Example 54 | 152.1 | 72.1 | 4.7 | 1208 |
| Example 55 | 153.1 | 67.8 | 3.2 | 1378 |
| Example 56 | 153.7 | 74.1 | 2.3 | 1401 |
| Example 57 | 153.7 | 71.2 | 2.5 | 1398 |
| Example 58 | 153.9 | 74.8 | 2.1 | 1378 |
| Example 59 | 153.8 | 73.9 | 1.9 | 1411 |
| Example 60 | 153.7 | 72.5 | 2.3 | 1398 |
| Example 61 | 153.5 | 70.2 | 3.8 | 1331 |
| Example 62 | 152.1 | 66.7 | 3 | 1311 |
| Example 63 | 152.7 | 69.7 | 3.1 | 1121 |
| Example 64 | 152.4 | 69.5 | 3.2 | 1342 |
| Example 65 | 152.7 | 69.8 | 3.3 | 1321 |
| Example 66 | 152.4 | 69.5 | 3.2 | 1341 |
| Example 67 | 153.1 | 70 | 3.1 | 1378 |
| Example 68 | 152.8 | 69.9 | 3 | 1326 |
| Example 69 | 152.5 | 69.5 | 3.3 | 1289 |
| Example 70 | 152.1 | 68.7 | 3.2 | 1291 |
| Example 71 | 153.4 | 66.4 | 4.7 | 1087 |

Furthermore, the electrolyte in the full cells of Examples 1 to 29 above was replaced with the electrolyte obtained by the following process: the organic solvents ethylene carbonate (EC) and ethyl methyl carbonate (EMC) were mixed at a volume ratio of 3/7, 12.5wt% (based on weight of the solvent of ethylene carbonate and ethyl methyl carbonate) LiPF₆ was dissolved in the foregoing organic solvent, and then stirred well; and the electrolyte of the button batteries was replaced with the following electrolyte: a solution containing ethylene carbonate (EC) + diethyl carbonate (DEC) + dimethyl carbonate (DMC) at a volume ratio of 1:1:1 and 1 mol/L LiPF₆. For the button batteries or full cells in Comparative Examples 18 to 46, the dissolving-out amounts of Mn and Fe after cycling (ppm), button battery capacity at 0.1C (mAh/g) (mAh/g), ratio of 3C constant current charge (%), number of cycles corresponding to 80% capacity retention rate at 45°C, and cell swelling rate after storage at 60°C (%) were tested according to the above method, and the test results were recorded in Table 14.

**Table 14**

| Comparative example number | Ratio of 3C constant current charge (%) | Dissolving-out amounts of Mn and Fe after cycling (ppm) | Button cell capacity at 0.1C (mAh/g) | Cell swelling rate after 30 days of storage at 60°C (%) | Number of cycles at 80% capacity retention rate at 45°C |
|---|---|---|---|---|---|
| Comparative Example 18 | 70.3 | 7 | 157.2 | 4.2 | 1128 |
| Comparative Example 19 | 70.2 | 6 | 156.3 | 3.7 | 1253 |
| Comparative Example 20 | 70.1 | 5 | 155.4 | 3.4 | 1374 |
| Comparative Example 21 | 70.2 | 3 | 153.7 | 2.9 | 1406 |
| Comparative Example 22 | 70.1 | 5 | 156.7 | 3.1 | 1501 |
| Comparative Example 23 | 69.7 | 4 | 156.2 | 2.8 | 1576 |
| Comparative Example 24 | 68.4 | 3 | 155.8 | 2.5 | 1647 |
| Comparative Example 25 | 69.1 | 9 | 156.4 | 3.4 | 1058 |
| Comparative Example 26 | 73.4 | 6 | 157.6 | 2.9 | 1286 |
| Comparative Example 27 | 75.4 | 5 | 157.8 | 2.5 | 1486 |
| Comparative Example 28 | 72.4 | 6 | 157.3 | 3.5 | 1026 |
| Comparative Example 29 | 74.5 | 4 | 156.3 | 2.5 | 1136 |
| Comparative Example 30 | 75.3 | 5 | 156.6 | 3.5 | 1207 |
| Comparative Example 31 | 76.5 | 3 | 153.8 | 3.7 | 1308 |
| Comparative Example 32 | 74.3 | 3 | 153.8 | 3.7 | 1109 |
| Comparative Example 33 | 73.1 | 5 | 154.2 | 3.8 | 1132 |
| Comparative Example 34 | 75.3 | 4 | 155.4 | 4.5 | 1258 |
| Comparative Example 35 | 76.1 | 4 | 154.3 | 4.7 | 1378 |
| Comparative Example 36 | 76.8 | 4 | 154.3 | 4.7 | 1328 |
| Comparative Example 37 | 75.4 | 4 | 153.9 | 3.3 | 1458 |
| Comparative Example 38 | 76.1 | 4 | 154.5 | 3.5 | 1327 |
| Comparative Example 39 | 72.1 | 2 | 152.1 | 2.7 | 1556 |
| Comparative Example 40 | 76.4 | 3 | 151.4 | 2.4 | 1645 |
| Comparative Example 41 | 76.3 | 3 | 152.1 | 2.5 | 1548 |
| Comparative Example 42 | 78.4 | 3 | 158.6 | 2.9 | 1538 |
| Comparative Example 43 | 56.4 | 8 | 152.3 | 4.8 | 1017 |
| Comparative Example 44 | 74.3 | 6 | 155.4 | 3.8 | 1126 |
| Comparative Example 45 | 54.7 | 9 | 154.9 | 6.4 | 986 |
| Comparative Example 46 | 68.4 | 7 | 155.6 | 4.5 | 1047 |

According to the comparison between Table 9 and Table 14, it can be seen that the electrolyte composition of this application can further improve the rate performance and cycling performance of the secondary battery.

On the basis of the electrolyte of Example 4, a second additive is further added, Table 15 indicates the types of additives and the percentages of the additives in the electrolyte. The initial gram capacity (mAh/g) of the button battery, ratio of 3C constant current charge (%), number of cycles at 80% capacity retention rate at 45°C, and cell swelling rate of storage at 60°C (%) were tested according to the above test method, and the test results were recorded in Table 15.

**Table 15**

| No. | First additive | | Second additive | | Button battery gram capacity at 0.1C (mAh/g) | Ratio of 3C constant current charge (%) | Batter swelling rate after 30 days of storage at 60°C (%) | Number of cycles corresponding to 80% capacity retention rate at 45°C |
|---|---|---|---|---|---|---|---|---|
| | Type | W3 (%) | Type | W4 (%) | | | | |
| Example 72 | | | Ethylene sulfite | | 155.8 | 77.1 | 1.4 | 1560 |
| Example 73 | | | Methane methylene disulfonate | | 155.6 | 76.5 | 1.4 | 1610 |
| Example 74 | | | Glutaronitrile | | 156.9 | 78.1 | 1.3 | 1670 |
| Example 75 | | | Ethanonitrile | | 155.5 | 77.4 | 1.4 | 1604 |
| Example 76 | | | Ethoxypentafluorocyclotriphosphazene | | 155.9 | 77.7 | 1.4 | 1582 |
| Example 77 | Additive 1 | 3 | Cyclohexylbenzene | 0.5 | 155.5 | 77.2 | 1.5 | 1616 |
| Example 78 | | | Methoxypentafluorocyclotriphosphazene | | 156 | 77.3 | 1.4 | 1570 |
| Example 79 | | | Succinic anhydride | | 155.6 | 76.5 | 1.4 | 1558 |
| Example 80 | | | Silane phosphite compound | | 156.2 | 76.7 | 1.5 | 1591 |
| Example 81 | | | Silane phosphate compound | | 155.7 | 76.5 | 1.4 | 1604 |
| Example 82 | | | Silane borate compound | | 156 | 77 | 1.4 | 1546 |
| Example 83 | | | Glutaronitrile | 0.01 | 156 | 77.2 | 1.5 | 1597 |
| Example 84 | | | Glutaronitrile | 20 | 156.2 | 77.1 | 1.4 | 1621 |
| Example 85 | | | Glutaronitrile | 0.05 | 155.9 | 77.7 | 1.4 | 1625 |
| Example 86 | | | Glutaronitrile | 0.1 | 156.3 | 77.8 | 1.4 | 1645 |
| Example 87 | | | Glutaronitrile | 5 | 156.1 | 77.5 | 1.4 | 1631 |
| Example 88 | | | Glutaronitrile | 25 | 154.2 | 75.7 | 1.6 | 1515 |
| Example 89 | | | Glutaronitrile | 0.005 | 155.2 | 75.9 | 1.8 | 1482 |
| Notes: | | | | 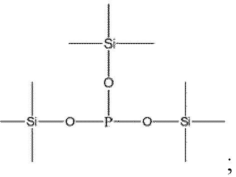 | | | | |
| The silane phosphite compound in Example 80 is | | | | | | | | |
| The silane phosphate compound in Example 81 is | | | | 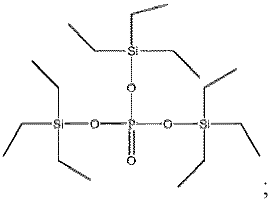 | | | | |
| The silane phosphite compound in Example 82 is | | | | 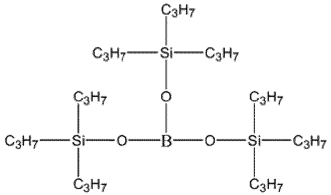 . | | | | |

As can be seen from the comparison between the data in Table 8 with the data in Example 4, the use of the second additive can further improve the cycling performance.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A secondary battery, comprising: a positive electrode plate and a non-aqueous electrolyte,
the positive electrode plate comprising a positive electrode active material having a core-shell structure, the positive electrode active material comprising a core and a shell enveloping the core, wherein
a chemical formula of the core is Li₁₊ₓMn_{1-y}A_{y}P_{1-z}R_{z}O₄, wherein x is any value in the range of -0.100 to 0.100, y is any value in the range of 0.001 to 0.500, z is any value in the range of 0.001 to 0.100, A is one or more elements selected from Zn, Al, Na, K, Mg, Mo, W, Ti, V, Zr, Fe, Ni, Co, Ga, Sn, Sb, Nb, and Ge, optionally one or more elements from Fe, Ti, V, Ni, Co, and Mg, R is one or more elements selected from B, Si, N and S, optionally R being one element selected from B, Si, N and S, and the values of x, y, and z satisfy a condition that the entire core is made electrically neutral; and
the shell comprises a first coating layer enveloping the core, a second coating layer enveloping the first coating layer, and a third coating layer enveloping the second coating layer; wherein
the first coating layer comprises a crystalline pyrophosphate LiaMP₂O₇ and/or Mb(P₂O₇)_{c}, wherein 0 ≤ a ≤ 2, 1 ≤ b ≤ 4, and 1 ≤ c ≤ 6, values of a, b, and c satisfy a condition of keeping the crystalline pyrophosphate LiaMP₂O₇ or Mb(P₂O₇)_{c} electrically neutral; and M in the crystalline pyrophosphate LiaMP₂O₇ and Mb(P₂O₇)_{c} each is independently one or more elements selected from Fe, Ni, Mg, Co, Cu, Zn, Ti, Ag, Zr, Nb and Al;
the second coating layer comprises crystalline phosphate XPO₄, X being one or more elements selected from Li, Fe, Ni, Mg, Co, Cu, Zn, Ti, Ag, Zr, Nb and Al; and
the third coating layer is carbon; and
the non-aqueous electrolyte comprising an organic solvent, wherein the organic solvent comprises a first solvent, the first solvent comprising one or more of compounds represented by formula 1: 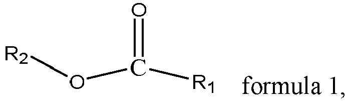
R₁ and R₂ each independently being one of C1 to C10 alkyl and C1 to C10 haloalkyl group, and optionally, R₁ and R₂ each independently being one of methyl group, ethyl group, propyl group, butyl group, pentyl group, hexyl group, fluoromethyl group, fluoroethyl group, fluoropropyl group, fluorobutyl group, fluoropentyl group, and fluorohexyl group, and further optionally, R₁ and R₂ each independently being one of methyl group, ethyl group, propyl group, fluoromethyl group, fluoroethyl group, and fluoropropyl group.

2. The secondary battery according to claim 1, wherein the first solvent comprises at least one of the following compounds: 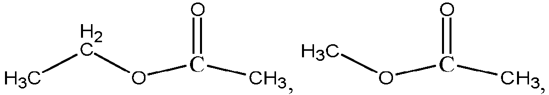 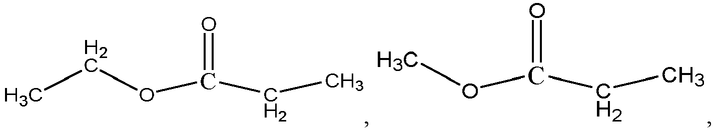 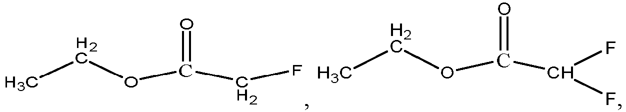 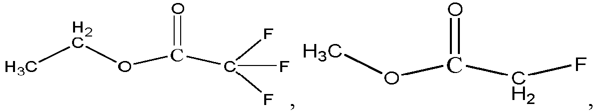 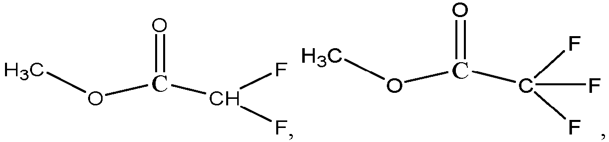 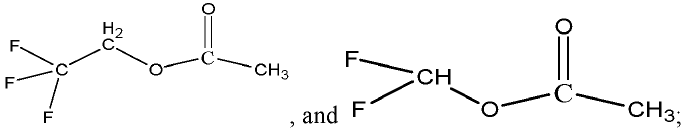 and
optionally, the first solvent comprises at least one of the following compounds:

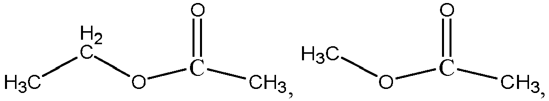

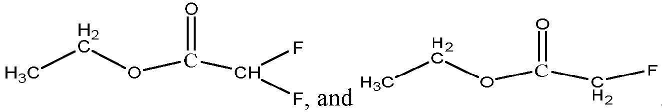

3. The secondary battery according to claim 1 or 2, wherein a mass percentage of the first solvent is w1 based on total mass of the organic solvent, w1 ranging from 20% to 80%; and optionally, w1 ranging from 30% to 75%; and
optionally, the organic solvent further comprises a second solvent, the second solvent comprising one or more from a group consisting of a linear carbonate and a cyclic carbonate; and further optionally, a mass percentage of the second solvent is w2 based on the total mass of the organic solvent, w2 ranging from 20% to 70%; and optionally, w2 ranging from 25% to 70%.

4. The secondary battery according to any one of claims 1 to 3, wherein the non-aqueous electrolyte further comprises a first additive, the first additive comprising one or more from a group consisting of sultone and cyclic sulfate.

5. The secondary battery according to claim 4, wherein the sultone comprises at least one of compounds represented by formula 2: 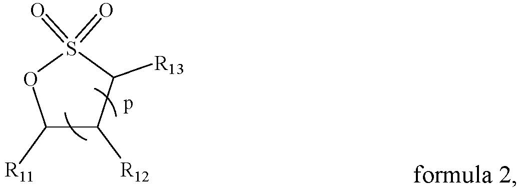 wherein
p represents 1, 2 or 3;
R₁₁ is one of a hydrogen atom, halogen atom, C1 to C12 alkyl group, C1 to C12 haloalkyl group, C1 to C12 alkoxy group, and C1 to C12 haloalkoxy group; optionally R₁₁ is one of a hydrogen atom, halogen atom, C1 to C6 alkyl group, C1 to C3 haloalkyl group, C1 to C3 alkoxy group, and C1 to C3 haloalkoxy group; optionally the alkoxy is linear alkoxy or cyclic alkoxy; optionally the cyclic alkoxy shares one carbon atom with a parent ring of the sultone, and further optionally the cyclic alkoxy has 4, 5, or 6 carbon atoms;
each R₁₂ is independently one of a hydrogen atom, halogen atom, C1 to C12 alkyl group, C1 to C12 haloalkyl group, C1 to C12 alkoxy group, C1 to C12 haloalkoxy group, and 4- to 7-membered sultone group; optionally each R12 is independently one of a hydrogen atom, halogen atom, C1 to C3 alkyl group, C1 to C3 haloalkyl group, C1 to C3 alkoxy group, C1 to C3 haloalkoxy group, and 5- to 6-membered sultone group; optionally the sultone group shares one carbon atom with the parent ring of the sultone, and optionally the sultone group is a 5-membered ring;
R₁₁ and R₁₂ each form a 5- to 10-membered cycloalkyl group with respective carbon atoms bonded thereto; and
R₁₃ is one of a hydrogen atom, halogen atom, carbonyl group, C2 to C6 ester group, C1 to C12 alkyl group, C1 to C12 haloalkyl group, C2 to C12 alkenyl group, C1 to C12 alkoxy group, C1 to C12 haloalkoxy group, and C6 to C20 aryl group or benzyl group; and optionally, R₁₃ is one of a hydrogen atom, halogen atom, carbonyl group, C2 to C3 ester group, C1 to C3 alkyl group, C1 to C3 haloalkyl group, C2 to C6 alkenyl group, C1 to C3 alkoxy group, C1 to C3 haloalkoxy group, and C6 to C10 aryl group or benzyl group;
and/or,
the cyclic sulfate comprises at least one of compounds represented by formula 3, 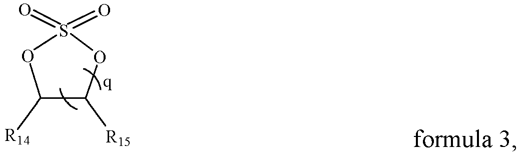 wherein
q represents 1, 2 or 3;
R₁₄ is one of a hydrogen atom, halogen atom, carbonyl group, C1 to C12 alkyl group, C1 to C12 haloalkyl group, C2 to C12 alkenyl group, C1 to C12 alkoxy group, C1 to C12 haloalkoxy group, C2 to C6 ester group, and 4- to 7-membered cyclic sulfate group; optionally R14 is one of a hydrogen atom, halogen atom, carbonyl group, double bond, C1 to C6 alkyl group, C1 to C3 haloalkyl group, C1 to C3 alkoxy group, C1 to C3 haloalkoxy group, C2 to C3 easter group, and 4- to 5-membered cyclic sulfate group; and optionally the cyclic sulfate group shares one carbon atom with the cyclic sulfate;
each R₁₅ is independently one of a hydrogen atom, halogen atom, C1 to C12 alkyl group, C1 to C12 haloalkyl group, C1 to C12 alkoxy group, C1 to C12 haloalkoxy group, and C6 to C20 aryl group; and optionally each R₁₅ is independently one of a hydrogen atom, halogen atom, C1 to C6 alkyl group, C1 to C3 haloalkyl group, C1 to C3 alkoxy group, C1 to C3 haloalkoxy group, and C6 to C10 aryl group; or
R₁₄ and R₁₅ each form a 4- to 7-membered cyclic sulfate group together with respective carbon atoms bonded thereto, and further optionally R₁₄ and R₁₅ each form a 5-membered cyclic sulfate group together with respective carbon atoms bonded thereto;
optionally, the sultone comprises at least one of the following compounds: 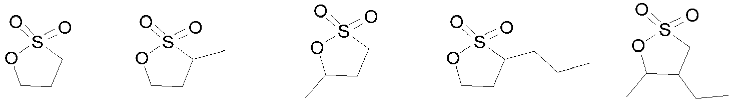 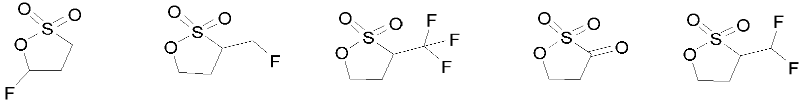 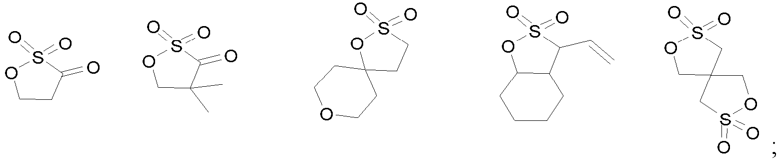
optionally, the cyclic sulfate comprises at least one of the following compounds: 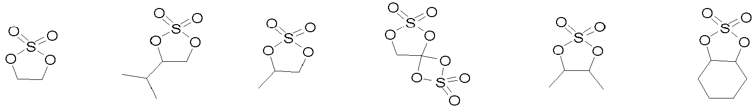 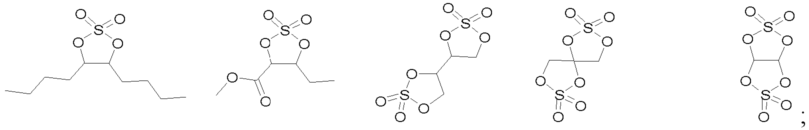
further optionally, the sultone comprises at least one of the following compounds: 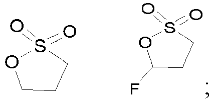
and
further optionally, the cyclic sulfate comprises at least one of the following compounds:

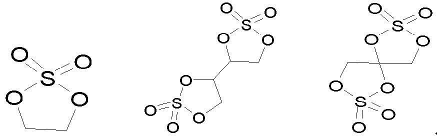

6. The secondary battery according to claim 4 or 5, wherein, a percentage of the first additive is W3 based on total mass of the non-aqueous electrolyte and 0.01% ≤ W3 ≤ 20%, optionally 0.1% ≤ W3 ≤ 10%, and further optionally 0.3% ≤ W3 ≤ 5%.

7. The secondary battery according to any one of claims 1 to 6, wherein the non-aqueous electrolyte further comprises a second additive, the second additive comprising one or more from a group consisting of a sulfite compound, disulfonic acid compound, nitrile compound, aromatic compound, a phosphazene compound, cyclic anhydride compound, phosphite compound, phosphate compound, and borate compound.

8. The secondary battery according to claim 7, wherein, a percentage of the second additive is W4 based on total mass of the non-aqueous electrolyte and 0.01% ≤ W4 ≤ 20%, optionally 0.05% ≤ W4 ≤ 5%, and further optionally 0.1% ≤ W4 ≤ 3%.

9. The secondary battery according to any one of claims 1 to 8, wherein
an application amount of the first coating layer is C1wt% based on weight of the core, C1 being greater than 0 and less than or equal to 6, optionally greater than 0 and less than or equal to 5.5, and more optionally greater than 0 and less than or equal to 2; and/or
an application amount of the second coating layer is C2wt% based on the weight of the core, C2 being greater than 0 and less than or equal to 6, optionally greater than 0 and less than or equal to 5.5, and more optionally being 2 to 4; and/or
an application amount of the third coating layer is C3wt% based on the weight of the core, C3 being greater than 0 and less than or equal to 6, optionally greater than 0 and less than or equal to 5.5, and more optionally greater than 0 and less than or equal to 2.

10. The secondary battery according to any one of claims 1 to 9, wherein
the crystalline pyrophosphate in the first coating layer has an interplanar spacing in the range of 0.293 nm to 0.470 nm and an included angle in the range of 18.00° to 32.00° in the [111] crystal orientation; and
the crystalline phosphate in the second coating layer has an interplanar spacing in the range of 0.244 nm to 0.425 nm and an included angle in the range of 20.00° to 37.00° in the [111] crystal orientation.

11. The secondary battery according to any one of claims 1 to 10, wherein
a ratio of y to 1-y in the core ranges from 1:10 to 1:1, optionally from 1:4 to 1:1; and/or
a ratio of z to 1-z in the core ranges from 1:9 to 1:999, and optionally from 1:499 to 1:249.

12. The secondary battery according to any one of claims 1 to 11, wherein
the carbon of the third coating layer is a mixture of SP2 carbon and SP3 carbon;
and optionally, a molar ratio of the SP2 carbon to the SP3 carbon is any value in the range of 0.1 to 10, optionally, any value in the range of 2.0 to 3.0.

13. The secondary battery according to any one of claims 1 to 12, wherein
a thickness of the first coating layer ranges from 1 nm to 10 nm; and/or
a thickness of the second coating layer ranges from 2 nm to 15 nm; and/or
a thickness of the third coating layer ranges from 2 nm to 25 nm.

14. The secondary battery according to any one of claims 1 to 13, wherein
based on weight of the positive electrode active material,
a percentage of element manganese is in the range of 10wt% to 35wt%, optionally in the range of 15wt% to 30wt%, and more optionally in the range of 17wt% to 20wt%;
a percentage of element phosphorus is in the range of 12wt% to 25wt%, optionally in the range of 15wt% to 20wt%; and
optionally, a weight ratio of element manganese to element phosphorus is in the range of 0.90 to 1.25, optionally in the range of 0.95 to 1.20.

15. The secondary battery according to any one of claims 1 to 14, wherein
a lattice change rate of the positive electrode active material having a core-shell structure before and after complete deintercalation or intercalation of lithium is below 4%, optionally below 3.8%, and more optionally from 2.0% to 3.8%.

16. The secondary battery according to any one of claims 1 to 15, wherein
a Li/Mn anti-site defect concentration of the positive electrode active material having a core-shell structure is below 4%, optionally below 2.2%, and more optionally from 1.5% to 2.2%.

17. The secondary battery according to any one of claims 1 to 16, wherein
a surface oxygen valence of the positive electrode active material having a core-shell structure is below -1.90, and optionally from -1.90 to -1.98.

18. A battery module, comprising a secondary battery, wherein the secondary battery is the secondary battery according to any one of claims 1 to 17.

19. A battery pack, comprising a battery module, wherein the battery module is the battery module according to claim 18.

20. An electric apparatus, comprising a secondary battery, a battery module, or a battery pack, wherein the secondary battery is selected from the secondary battery according to any one of claims 1 to 17, the battery module is the battery module according to claim 18, or the battery pack is the battery pack according to claim 19.
